# EUROPEAN PATENT SPECIFICATION

(11) **EP 1 082 646 B1**
(45) Date of publication and mention of the grant of the patent: **24.08.2011**
(21) Application number: 99920302.9
(22) Date of filing: 03.05.1999
(51) Int. Cl.: G06N 99/00, G06F 15/18

(54) **PRE-PROCESSING AND POST-PROCESSING FOR ENHANCING KNOWLEDGE DISCOVERY USING SUPPORT VECTOR MACHINES**
VORVERARBEITUNG UND NACHVERARBEITUNG VON VERBESSERTER KENNTNISENTDECKUNG UNTER VERWENDUNG VON UNTERSTÜTZUNGSVEKTORMASCHINEN
PRE-TRAITEMENT ET POST-TRAITEMENT PERMETTANT D'AMELIORER LA DECOUVERTE DE CONNAISSANCES AU MOYEN DE MACHINES A VECTEURS DE SOUTIEN

(30) Priority: 01.05.1998 US 83961 P; 01.05.1999 US 303389; 01.05.1999 US 305345; 01.05.1999 US 303386; 01.05.1999 US 303387
(43) Date of publication of application: 14.03.2001
(60) Divisional application: 10184558.4
(73) Proprietor: Health Discovery Corporation, Savannah, Georgia 31401 (US)
(72) Inventor: BARNHILL, Stephen D., Savannah, Georgia 31411 (US)
(74) Representative: Viering, Hans-Martin
(86) International application number: PCT/US1999/009666
(87) International publication number: WO 1999/057622

(56) References cited:
- US-A- 5 809 144
- OSUNA E. et al., Support Vector Machines: Training and Applications; MIT C.B.C.L. Paper No. 144, March 1997, pages 1-41, XP002923203.
- ALPAYDIN E.: 'Multiple Neural Networks and Weighted Voting' BOGAZICI UNIVERSITY 1992, pages 29 - 32, XP002923204
- KIM J.: 'A systematic approach to classifier selection on combining multiple classifiers for handwritten digit recognition' DOCUMENT ANALYSIS AND RECOGNITION, PROCEEDINGS OF THE FOURTH INTERNATIONAL CONFERENCE vol. 2, 1997, pages 459 - 462, XP002923205
- RAO V, RAO H: "C++ Neural Networks and Fuzzy Logic Second Edition" 1995, MIS: PRESS , XP002477376 ISBN: 1-55851-552-6

## Description

The present invention relates to a method and system for using learning machines to discover knowledge from data according to the preambles of claims 1 and 20, respectively, as known from Osuna, et al., "Support Vector Machines: Training and Applications"; MIT C.B.C.I. Paper No. 144; March 1997.

Knowledge discovery is the most desirable end product of data collection. Recent advancements in database technology have lead to an explosive growth in systems and methods for generating, collecting and storing vast amounts of data. While database technology enables efficient collection and storage of large data sets, the challenge of facilitating human comprehension of the information in this data is growing ever more difficult. With many existing techniques the problem has become unapproachable. Thus, there remains a need for a new generation of automated knowledge discovery tools.

As a specific example, the Human Genome Project is populating a multi-gigabyte database describing the human genetic code. Before this mapping of the human genome is complete (expected in 2003), the size of the database is expected to grow significantly. The vast amount of data in such a database overwhelms traditional tools for data analysis, such as spreadsheets and ad hoc queries. Traditional methods of data analysis may be used to create informative reports from data, but do not have the ability to intelligently and automatically assist humans in analyzing and finding patterns of useful knowledge in vast amounts of data. Likewise, using traditionally accepted reference ranges and standards for interpretation, it is often impossible for humans to identify patterns of useful knowledge even with very small amounts of data.

One recent development that has been shown to be effective in some examples of machine learning is the back-propagation neural network. Back-propagation neural networks are learning machines that may be trained to discover knowledge in a data set that is not readily apparent to a human. However, there are various problems with back-propagation neural network approaches that prevent neural networks from being well-controlled learning machines. For example, a significant drawback of back-propagation neural networks is that the empirical risk function may have many local minimums, a case that can easily obscure the optimal solution from discovery by this technique. Standard optimization procedures employed by back-propagation neural networks may converge to a minimum, but the neural network method cannot guarantee that even a localized minimum is attained much less the desired global minimum. The quality of the solution obtained from a neural network depends on many factors. In particular the skill of the practitioner implementing the neural network determines the ultimate benefit, but even factors as seemingly benign as the random selection of initial weights can lead to poor results. Furthermore, the convergence of the gradient based method used in neural network learning is inherently slow. A further drawback is that the sigmoid function has a scaling factor, which affects the quality of approximation. Possibly the largest limiting factor of neural networks as related to knowledge discovery is the "curse of dimensionality" associated with the disproportionate growth in required computational time and power for each additional feature or dimension in the training data.

The shortcomings of neural networks are overcome using support vector machines. In general terms, a support vector machine maps input vectors into high dimensional feature space through non-linear mapping function, chosen a priori. In this high dimensional feature space, an optimal separating hyperplane is constructed. The optimal hyperplane is then used to determine things such as class separations, regression fit, or accuracy in density estimation.

Within a support vector machine, the dimensionally of the feature space may be huge. For example, a fourth degree polynomial mapping function causes a 200 dimensional input space to be mapped into a 1.6 billionth dimensional feature space. The kernel trick and the Vapnik-Chervonenkis dimension allow the support vector machine to thwart the "curse of dimensionality" limiting other methods and effectively derive generalizable answers from this very high dimensional feature space.

If the training vectors are separated by the optimal hyperplane (or generalized optimal hyperplane), then the expectation value of the probability of committing an error on a test example is bounded by the examples in the training set. This bound depends neither on the dimensionality of the feature space, nor on the norm of the vector of coefficients, nor on the bound of the number of the input vectors. Therefore, if the optimal hyperplane can be constructed from a small number of support vectors relative to the training set size, the generalization ability will be high, even in infinite dimensional space.

As such, support vector machines provide a desirable solution for the problem of discovering knowledge from vast amounts of input data. However, the ability of a support vector machine to discover knowledge from a data set is limited in proportion to the information included within the training data set. Accordingly, there exists a need for a system and method for pre-processing data so as to augment the training data to maximize the knowledge discovery by the support vector machine.

Furthermore, the raw output from a support vector machine may not fully disclose the knowledge in the most readily interpretable form. Thus, there further remains a need for a system and method for post-processing data output from a support vector machine in order to maximize the value of the information delivered for human or further automated processing.

In addition, the ability of a support vector machine to discover knowledge from data is limited by the selection of a kernel. Accordingly, there remains a need for an improved system and method for selecting and/or creating a desired kernel for a support vector machine.

Osuna, et al., "Support. Vector Machines: Training and Applications"; MIT C.B.C.I. Paper No. 144; March 1997 discloses a method for enhancing knowledge discovered from data using a learning machine comprising the steps of pre-processing a training data set, training the learning machine using the pre-processed training data set, pre-processing a test data set to equalize the data and reduce dimensionality, wherein the test data set has known characteristics, testing the trained learning machine using the pre-processed test data set to generate a test output; post-processing the test output to determine if the test output is an optimal solution based on the known characteristics, if the test output is not the optimal solution, adjusting, retraining and retesting the learning machine until the optimal solution is achieved; if the test output is the optimal solution: collecting a live data set; pre-processing the live data set to equalize the data and reduce dimensionality, inputting the pre-processed live data set into the trained learning machine for processing to generate a live output; and post-processing the live output to interpret the live output into a meaningful form.

Rao, et al., "C++ Neural Networks and Fuzzy Logic"; MIS:Press; 1995; ISBN: 1-55851-552-6 describes neural networks. The disadvantages of neural networks, and the advantages of support vector machines over neural networks, are well explained above. Possibly the largest limiting factor of neural networks as related to knowledge discovery is the "curse of dimensionality" associated with the disproportionate growth in required computation time and power for each additional feature or dimension in the training data.

The present invention meets the above described needs by providing a system and method for enhancing knowledge discovered from data using a learning machine in general and a support vector machine in particular. A training data set is pre-processed in order to allow the most advantageous application of the learning machine. Each training data point comprises a vector having one or more coordinates. Pre-processing the training data set may comprise identifying missing or erroneous data points and taking appropriate steps to correct the flawed data or as appropriate remove the observation or the entire field from the scope of the problem. Pre-processing the training data set may also comprise adding dimensionality to each training data point by adding one or more new coordinates to the vector. The new coordinates added to the vector may be derived by applying a transformation to one or more of the original coordinates. The transformation may be based on expert knowledge, or may be computationally derived. In a situation where the training data set comprises a continuous variable, the transformation may comprise optimally categorizing the continuous variable of the training data set.

The support vector machine is trained using the pre-processed training data set. In this manner, the additional representations of the training data provided by the preprocessing may enhance the learning machine's ability to discover knowledge therefrom. In the particular context of support vector machines, the greater the dimensionality of the training set, the higher the quality of the generalizations that may be derived therefrom. When the knowledge to be discovered from the data relates to a regression or density estimation or where the training output comprises a continuous variable, the training output may be post-processed by optimally categorizing the training output to derive categorizations from the continuous variable.

A test data set is pre-processed in the same manner as was the training data set. Then, the trained learning machine is tested using the pre-processed test data set. A test output of the trained learning machine may be post-processed to determine if the test output is an optimal solution. Post-processing the test output may comprise interpreting the test output into a format that may be compared with the test data set. Alternative postprocessing steps may enhance the human interpretability or suitability for additional processing of the output data.

In the context of a support vector machine, the present invention also provides for the selection of a kernel prior to training the support vector machine. The selection of a kernel may be based on prior knowledge of the specific problem being addressed or analysis of the properties of any available data to be used with the learning machine and is typically dependant on the nature of the knowledge to be discovered from the data. Optionally, an iterative process comparing postprocessed training outputs or test outputs can be applied to make a determination as to which configuration provides the optimal solution. If the test output is not the optimal solution, the selection of the kernel may be adjusted and the support vector machine may be retrained and retested. When it is determined that the optimal solution has been identified, a live data set may be collected and pre-processed in the same manner as was the training data set. The pre-processed live data set is input into the learning machine for processing. The live output of the learning machine may then be post-processed by interpreting the live output into a computationally derived alphanumeric classifier.

In an exemplary embodiment a system is provided for enhancing knowledge discovered from data using a support vector machine. The exemplary system comprises a storage device for storing a training data set and a test data set, and a processor for executing a support vector machine. The processor is also operable for collecting the training data set from the database, pre-processing the training data set to enhance each of a plurality of training data points, training the support vector machine using the pre-processed training data set, collecting the test data set from the database, pre-processing the test data set in the same manner as was the training data set, testing the trained support vector machine using the pre-processed test data set, and in response to receiving the test output of the trained support vector machine, post-processing the test output to determine if the test output is an optimal solution. The exemplary system may also comprise a communications device for receiving the test data set and the training data set from a remote source. In such a case, the processor may be operable to store the training data set in the storage device prior pre-processing of the training data set and to store the test data set in the storage device prior pre-processing of the test data set. The exemplary system may also comprise a display device for displaying the post-processed test data. The processor of the exemplary system may further be operable for performing each additional function described above. The communications device may be further operable to send a computationally derived alphanumeric classifier to a remote source.

In an exemplary embodiment, a system and method are provided for enhancing knowledge discovery from data using multiple learning machines in general and multiple support vector machines in particular. Training data for a learning machine is pre-processed in order to add meaning thereto. Pre-processing data may involve transforming the data points and/or expanding the data points. By adding meaning to the data, the learning machine is provided with a greater amount of information for processing. With regard to support vector machines in particular, the greater the amount of information that is processed, the better generalizations about the data that may be derived. Multiple support vector machines, each comprising distinct kernels, are trained with the pre-processed training data and are tested with test data that is pre-processed in the same manner. The test outputs from multiple support vector machines are compared in order to determine which of the test outputs if any represents a optimal solution. Selection of one or more kernels may be adjusted and one or more support vector machines may be retrained and retested. When it is determined that an optimal solution has been achieved, live data is pre-processed and input into the support vector machine comprising the kernel that produced the optimal solution. The live output from the learning machine may then be post-processed into a computationally derived alphanumerical classifier for interpretation by a human or computer automated process.

In another exemplary embodiment, a system and method are provided for optimally categorizing a continuous variable. A data set representing a continuous variable comprises data points that each comprise a sample from the continuous variable and a class identifier. A number of distinct class identifiers within the data set is determined and a number of candidate bins is determined based on the range of the samples and a level of precision of the samples within the data set. Each candidate bin represents a sub-range of the samples. For each candidate bin, the entropy of the data points falling within the candidate bin is calculated. Then, for each sequence of candidate bins that have a minimized collective entropy, a cutoff point in the range of samples is defined to be at the boundary of the last candidate bin in the sequence of candidate bins. As an iterative process, the collective entropy for different combinations of sequential candidate bins may be calculated. Also the number of defined cutoff points may be adjusted in order to determine the optimal number of cutoff points, which is based on a calculation of minimal entropy. As mentioned, the exemplary system and method for optimally categorizing a continuous variable may be used for pre-processing data to be input into a learning machine and for post-processing output of a learning machine.

In still another exemplary embodiment, a system and method are provided for enhancing knowledge discovery from data using a learning machine in general and a support vector machine in particular in a distributed network environment. A customer may transmit training data, test data and live data to a vendor's server from a remote source, via a distributed network. The customer may also transmit to the server identification information such as a user name, a password and a financial account identifier. The training data, test data and live data may be stored in a storage device. Training data may then be pre-processed in order to add meaning thereto. Preprocessing data may involve transforming the data points and/or expanding the data points. By adding meaning to the data, the learning machine is provided with a greater amount of information for processing. With regard to support vector machines in particular, the greater the amount of information that is processed, the better generalizations about the data that may be derived. The learning machine is therefore trained with the pre-processed training data and is tested with test data that is preprocessed in the same manner. The test output from the learning machine is post-processed in order to determine if the knowledge discovered from the test data is desirable. Post-processing involves interpreting the test output into a format that may be compared with the test data. Live data is pre-processed and input into the trained and tested learning machine. The live output from the learning machine may then be post-processed into a computationally derived alphanumerical classifier for interpretation by a human or computer automated process. Prior to transmitting the alpha numerical classifier to the customer via the distributed network, the server is operable to communicate with a financial institution for the purpose of receiving funds from a financial account of the customer identified by the financial account identifier.
FIG.1 is a flowchart illustrating an exemplary general method for increasing knowledge that may be discovered from data using a learning machine.
FIG. 2 is a flowchart illustrating an exemplary method for increasing knowledge that may be discovered from data using a support vector machine.
FIG. 3 is a flowchart illustrating an exemplary optimal categorization method that may be used in a stand-alone configuration or in conjunction with a learning machine for pre-processing or post-processing techniques in accordance with an exemplary embodiment of the present invention.
FIG. 4 illustrates an exemplary unexpanded data set that may be input into a support vector machine.
FIG. 5 illustrates an exemplary post-processed output generated by a support vector machine using the data set of FIG. 4.
FIG. 6 illustrates an exemplary expanded data set that may be input into a support vector machine.
FIG. 7 illustrates an exemplary post-processed output generated by a support vector machine using the data set of FIG. 6.
FIG. 8 illustrates exemplary input and output for a standalone application of the optimal categorization method of FIG. 3.
FIG. 9 is a comparison of exemplary post-processed output from a first support vector machine comprising a linear kernel and a second support vector machine comprising a polynomial kernel.
FIG. 10 is a functional block diagram illustrating an exemplary operating environment for an exemplary embodiment of the present invention.
FIG. 11 is a functional block diagram illustrating an alternate exemplary operating environment for an alternate embodiment of the present invention.
FIG. 12 is a functional block diagram illustrating an exemplary network operating environment for implementation of a further alternate embodiment of the present invention.

The present invention provides improved methods for discovering knowledge from data using learning machines. While several examples of learning machines exist and advancements are expected in this field, the exemplary embodiments of the present invention focus on the support vector machine. As is known in the art, learning machines comprise algorithms that may be trained to generalize using data with known outcomes. Trained learning machine algorithms may then be applied to cases of unknown outcome for prediction. For example, a learning machine may be trained to recognize patterns in data, estimate regression in data or estimate probability density within data.

Learning machines may be trained to solve a wide variety of problems as known to those of ordinary skill in the art. A trained learning machine may optionally be tested using test data to ensure that its output is validated within an acceptable margin of error. Once a learning machine is trained and tested, live data may be input therein. The live output of a learning machine comprises knowledge discovered from all of the training data as applied to the live data.

A first aspect of the present invention seeks to enhance knowledge discovery by optionally pre-processing data prior to using the data to train a learning machine and/or optionally post-processing the output from a learning machine. Generally stated, pre-processing data comprises reformatting or augmenting the data in order to allow the learning machine to be applied most advantageously. Similarly, post-processing involves interpreting the output of a learning machine in order to discover meaningful characteristics thereof. The meaningful characteristics to be ascertained from the output may be problem or data specific. Post-processing involves interpreting the output into a form that is comprehendible by a human or one that is comprehendible by a computer.

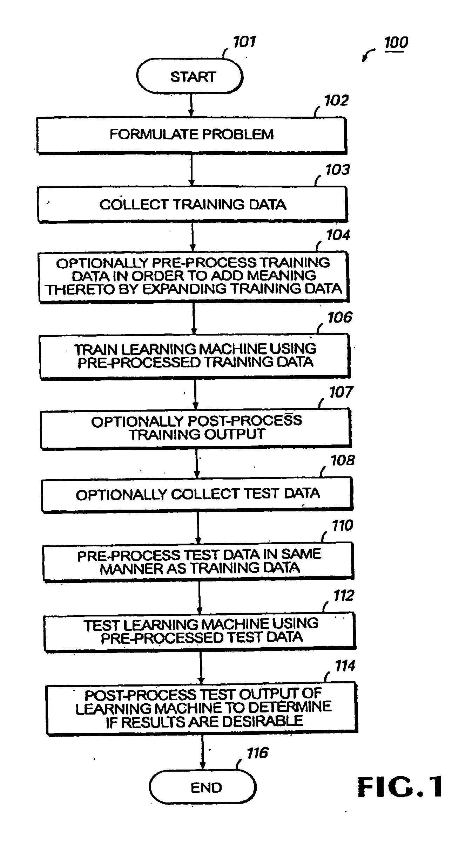

Exemplary embodiments of the present invention will hereinafter be described with reference to the drawing, in which like numerals indicate like elements throughout the several figures. **FIG. 1** is a flowchart illustrating a general method **100** for enhancing knowledge discovery using learning machines. The method **100** begins at starting block **101** and progresses to step **102** where a specific problem is formalized for application of knowledge discovery through machine learning. Particularly important is a proper formulation of the desired output of the learning machine. For instance, in predicting future performance of an individual equity instrument, or a market index, a learning machine is likely to achieve better performance when predicting the expected future change rather than predicting the future price level. The future price expectation can later be derived in a post-processing step as will be discussed later in this specification.

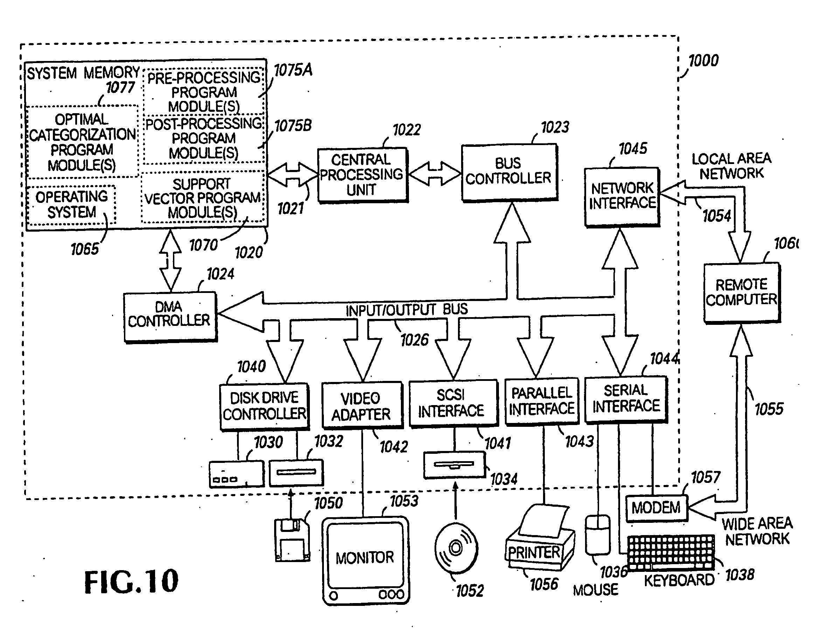

After problem formalization, step **103** addresses training data collection. Training data comprises a set of data points having known characteristics. Training data may be collected from one or more local and/or remote sources. The collection of training data may be accomplished manually or by way of an automated process, such as known electronic data transfer methods. Accordingly, an exemplary embodiment of the present invention may be implemented in a networked computer environment. Exemplary operating environments for implementing various embodiments of the present invention will be described in detail with respect to FIGS. 10-12.

Next, at step **104** the collected training data is optionally pre-processed in order to allow the learning machine to be applied most advantageously toward extraction of the knowledge inherent to the training data. During this preprocessing stage the training data can optionally be expanded through transformations, combinations or manipulation of individual or multiple measures within the records of the training data. As used herein, expanding data is meant to refer to altering the dimensionality of the input data by changing the number of observations available to determine each input point (alternatively, this could be described as adding or deleting columns within a database table). By way of illustration, a data point may comprise the coordinates (1,4,9). An expanded version of this data point may result in the coordinates (1,1,4,2,9,3). In this example, it may be seen that the coordinates added to the expanded data point are based on a square-root transformation of the original coordinates. By adding dimensionality to the data point, this expanded data point provides a varied representation of the input data that is potentially more meaningful for knowledge discovery by a learning machine. Data expansion in this sense affords opportunities for learning machines to discover knowledge not readily apparent in the unexpanded training data.

Expanding data may comprise applying any type of meaningful transformation to the data and adding those transformations to the original data. The criteria for determining whether a transformation is meaningful may depend on the input data itself and/or the type of knowledge that is sought from the data. Illustrative types of data transformations include: addition of expert information; labeling; binary conversion; sine, cosine, tangent, cotangent, and other trigonometric transformation; clustering; scaling; probabilistic and statistical analysis; significance testing; strength testing; searching for 2-D regularities; Hidden Markov Modeling; identification of equivalence relations; application of contingency tables; application of graph theory principles; creation of vector maps; addition, subtraction, multiplication, division, application of polynomial equations and other algebraic transformations; identification of proportionality; determination of discriminatory power; etc. In the context of medical data, potentially meaningful transformations include: association with known standard medical reference ranges; physiologic truncation; physiologic combinations; biochemical combinations; application of heuristic rules; diagnostic criteria determinations; clinical weighting systems; diagnostic transformations; clinical transformations; application of expert knowledge; labeling techniques; application of other domain knowledge; Bayesian network knowledge; etc. These and other transformations, as well as combinations thereof, will occur to those of ordinary skill in the art.

Those skilled in the art should also recognize that data transformations may be performed without adding dimensionality to the data points. For example a data point may comprise the coordinate (A, B, C). A transformed version of this data point may result in the coordinates (1, 2, 3), where the coordinate "1" has some known relationship with the coordinate "A," the coordinate "2" has some known relationship with the coordinate "B," and the coordinate "3" has some known relationship with the coordinate "C." A transformation from letters to numbers may be required, for example, if letters are not understood by a learning machine. Other types of transformations are possible without adding dimensionality to the data points, even with respect to data that is originally in numeric form. Furthermore, it should be appreciated that pre-processing data to add meaning thereto may involve analyzing incomplete, corrupted or otherwise "dirty" data. A learning machine cannot process "dirty" data in a meaningful manner. Thus, a pre-processing step may involve cleaning up a data set in order to remove, repair or replace dirty data points.

Returning to FIG. 1, the exemplary method **100** continues at step **106,** where the learning machine is trained using the pre-processed data. As is known in the art, a learning machine is trained by adjusting its operating parameters until a desirable training output is achieved. The determination of whether a training output is desirable may be accomplished either manually or automatically by comparing the training output to the known characteristics of the training data. A learning machine is considered to be trained when its training output is within a predetermined error threshold from the known characteristics of the training data. In certain situations, it may be desirable, if not necessary, to post-process the training output of the learning machine at step **107.** As mentioned, post-processing the output of a learning machine involves interpreting the output into a meaningful form. In the context of a regression problem, for example, it may be necessary to determine range categorizations for the output of a learning machine in order to determine if the input data points were correctly categorized. In the example of a pattern recognition problem, it is often not necessary to post-process the training output of a learning machine.

At step **108,** test data is optionally collected in preparation for testing the trained learning machine. Test data may be collected from one or more local and/or remote sources. In practice, test data and training data may be collected from the same source(s) at the same time. Thus, test data and training data sets can be divided out of a common data set and stored in a local storage medium for use as different input data sets for a learning machine. Regardless of how the test data is collected, any test data used must be pre-processed at step **110** in the same manner as was the training data. As should be apparent to those skilled in the art, a proper test of the learning may only be accomplished by using testing data of the same format as the training data. Then, at step **112** the learning machine is tested using the pre-processed test data, if any. The test output of the learning machine is optionally post-processed at step **114** in order to determine if the results are desirable. Again, the post processing step involves interpreting the test output into a meaningful form. The meaningful form may be one that is comprehendible by a human or one that is comprehendible by a computer. Regardless, the test output must be post-processed into a form which may be compared to the test data to determine whether the results were desirable. Examples of post-processing steps include but are not limited of the following: optimal categorization determinations, scaling techniques (linear and non-linear), transformations (linear and non-linear), and probability estimations. The method **100** ends at step **116.**

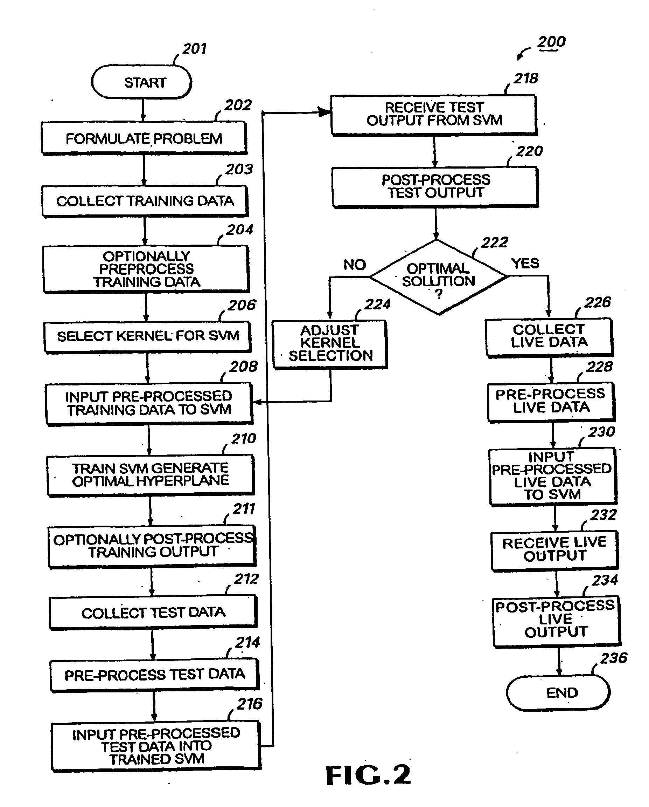

FIG. 2 is a flow chart illustrating an exemplary method **200** for enhancing knowledge that may be discovered from data using a specific type of learning machine known as a support vector machine (SVM). A SVM implements a specialized algorithm for providing generalization when estimating a multi-dimensional function from a limited collection of data. A SVM may be particularly useful in solving dependency estimation problems. More specifically, a SVM may be used accurately in estimating indicator functions (e.g. pattern recognition problems) and real-valued functions (e.g. function approximation problems, regression estimation problems, density estimation problems, and solving inverse problems). The SMV was originally developed by Vladimir N. Vapnik. The concepts underlying the SVM are explained in detail in his book, entitled Statistical Learning Theory (John Wiley & Sons, Inc. 1998). Accordingly, a familiarity with SVMs and the terminology used therewith are presumed throughout this specification.

The exemplary method **200** begins at starting block **201** and advances to step 202, where a problem is formulated and then to step **203,** where a training data set is collected. As was described with reference to **FIG. 1****,** training data may be collected from one or more local and/or remote sources, through a manual or automated process. At step **204** the training data is optionally pre-processed. Again, pre-processing data comprises enhancing meaning within the training data by cleaning the data, transforming the data and/or expanding the data. Those skilled in the art should appreciate that SVMs are capable of processing input data having extremely large dimensionality. In fact, the larger the dimensionality of the input data, the better generalizations a SVM is able to calculate. Therefore, while training data transformations are possible that do not expand the training data, in the specific context of SVMs it is preferable that training data be expanded by adding meaningful information thereto.

At step **206** a kernel is selected for the SVM. As is known in the art, different kernels will cause a SVM to produce varying degrees of quality in the output for a given set of input data. Therefore, the selection of an appropriate kernel may be essential to the desired quality of the output of the SVM. In one embodiment of the present invention, a kernel may be chosen based on prior performance knowledge. As is known in the art, exemplary kernels include polynomial kernels, radial basis classifier kernels, linear kernels, etc. In an alternate embodiment, a customized kernel may be created that is specific to a particular problem or type of data set. In yet another embodiment, the multiple SVMs may be trained and tested simultaneously, each using a different kernel. The quality of the outputs for each simultaneously trained and tested SVM may be compared using a variety of selectable or weighted metrics (see step 222) to determine the most desirable kernel.

Next, at step **208** the pre-processed training data is input into the SVM. At step **210,** the SVM is trained using the pre-processed training data to generate an optimal hyperplane. Optionally, the training output of the SVM may then be post-processed at step **211.** Again, post-processing of training output may be desirable, or even necessary, at this point in order to properly calculate ranges or categories for the output. At step **212** test data is collected similarly to previous descriptions of data collection. The test data is pre-processed at step **214** in the same manner as was the training data above. Then, at step **216** the pre-processed test data is input into the SVM for processing in order to determine whether the SVM was trained in a desirable manner. The test output is received from the SVM at step **218** and is optionally post-processed at step **220.**

Based on the post-processed test output, it is determined at step **222** whether an optimal minimum was achieved by the SVM. Those skilled in the art should appreciate that a SVM is operable to ascertain an output having a global minimum error. However, as mentioned above output results of a SVM for a given data set will typically vary in relation to the selection of a kernel. Therefore, there are in fact multiple global minimums that may be ascertained by a SVM for a given set of data. As used herein, the term "optimal minimum" or "optimal solution" refers to a selected global minimum that is considered to be optimal (e.g. the optimal solution for a given set of problem specific, pre-established criteria) when compared to other global minimums ascertained by a SVM. Accordingly, at step **222** determining whether the optimal minimum has been ascertained may involve comparing the output of a SVM with a historical or predetermined value. Such a predetermined value may be dependant on the test data set. For example, in the context of a pattern recognition problem where a data point are classified by a SVM as either having a certain characteristic or not having the characteristic, a global minimum error of 50% would not be optimal. In this example, a global minimum of 50% is no better than the result that would be achieved by flipping a coin to determine whether the data point had the certain characteristic. As another example, in the case where multiple SVMs are trained and tested simultaneously with varying kernels, the outputs for each SVM may be compared with each other SVM's outputs to determine the practical optimal solution for that particular set of kernels. The determination of whether an optimal solution has been ascertained may be performed manually or through an automated comparison process.

If it is determined that the optimal minimum has not been achieved by the trained SVM, the method advances to step **224,** where the kernel selection is adjusted. Adjustment of the kernel selection may comprise selecting one or more new kernels or adjusting kernel parameters. Furthermore, in the case where multiple SVMs were trained and tested simultaneously, selected kernels may be replaced or modified while other kernels may be re-used for control purposes. After the kernel selection is adjusted, the method **200** is repeated from step **208,** where the pre-processed training data is input into the SVM for training purposes. When it is determined at step **222** that the optimal minimum has been achieved, the method advances to step **226,** where live data is collected similarly as described above. The desired output characteristics that were known with respect to the training data and the test data are not known with respect to the live data.

At step **228** the live data is pre-processed in the same manner as was the training data and the test data. At step **230,** the live pre-processed data is input into the SVM for processing. The live output of the SVM is received at step **232** and is post-processed at step **234.** In one embodiment of the present invention, post-processing comprises converting the output of the SVM into a computationally derived alpha-numerical classifier, for interpretation by a human or computer. Preferably, the alphanumerical classifier comprises a single value that is easily comprehended by the human or computer. The method **200** ends at step **236.**

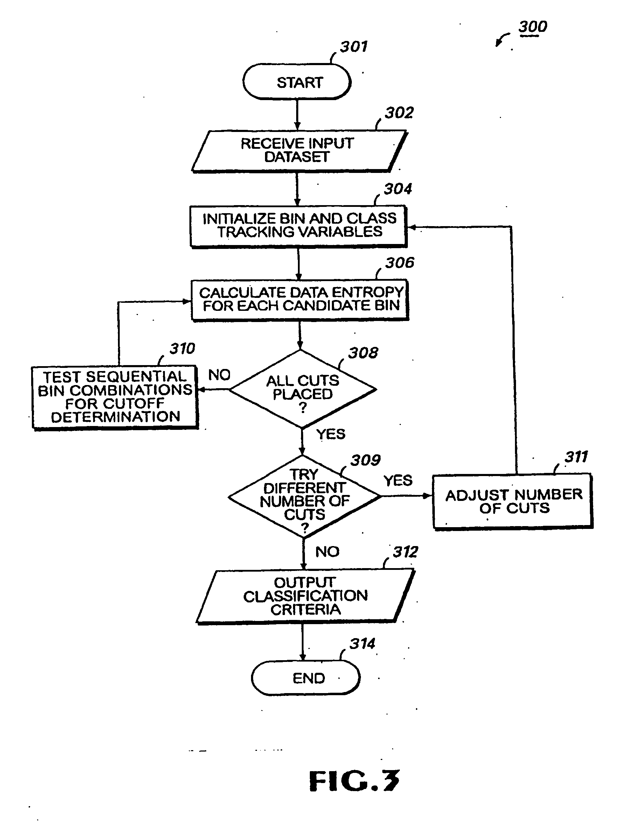

FIG. 3 is a flow chart illustrating an exemplary optimal categorization method **300** that may be used for pre-processing data or post-processing output from a learning machine in accordance with an exemplary embodiment of the present invention. Additionally, as will be described below, the exemplary optimal categorization method may be used as a stand-alone categorization technique, independent from learning machines. The exemplary optimal categorization method **300** begins at starting block **301** and progresses to step **302,** where an input data set is received. The input data set comprises a sequence of data samples from a continuous variable. The data samples fall within two or more classification categories. Next, at step **304** the bin and class-tracking variables are initialized. As is known in the art, bin variables relate to resolution and class-tracking variables relate to the number of classifications within the data set. Determining the values for initialization of the bin and class-tracking variables may be performed manually or through an automated process, such as a computer program from analyzing the input data set. At step **306,** the data entropy for each bin is calculated. Entropy is a mathematical quantity that measures the uncertainty of a random distribution. In the exemplary method **300,** entropy is used to gauge the gradations of the input variable so that maximum classification capability is achieved.

The method **300** produces a series of "cuts" on the continuous variable, such that the continuous variable may be divided into discrete categories. The cuts selected by the exemplary method **300** are optimal in the sense that the average entropy of each resulting discrete category is minimized. At step **308,** a determination is made as to whether all cuts have been placed within input data set comprising the continuous variable. If all cuts have not been placed, sequential bin combinations are tested for cutoff determination at step **310.** From step **310,** the exemplary method **300** loops back through step **306** and returns to step **308** where it is again determined whether all cuts have been placed within input data set comprising the continuous variable. When all cuts have been placed, the entropy for the entire system is evaluated at step **309** and compared to previous results from testing more or fewer cuts. If it cannot be concluded that a minimum entropy state has been determined, then other possible cut selections must be evaluated and the method proceeds to step **311.** From step **311** a heretofore untested selection for number of cuts is chosen and the above process is repeated from step **304.** When either the limits of the resolution determined by the bin width has been tested or the convergence to a minimum solution has been identified, the optimal classification criteria is output at step **312** and the exemplary optimal categorization method **300** ends at step **314.**

The optimal categorization method **300** takes advantage of dynamic programming techniques. As is known in the art, dynamic programming techniques may be used to significantly improve the efficiency of solving certain complex problems through carefully structuring an algorithm to reduce redundant calculations. In the optimal categorization problem, the straightforward approach of exhaustively searching through all possible cuts in the continuous variable data would result in an algorithm of exponential complexity and would render the problem intractable for even moderate sized inputs. By taking advantage of the additive property of the target function, in this problem the average entropy, the problem may be divide into a series of sub-problems. By properly formulating algorithmic sub-structures for solving each sub-problem and storing the solutions of the sub-problems, a great amount of redundant computation may be identified and avoided. As a result of using the dynamic programming approach, the exemplary optimal categorization method **300** may be implemented as an algorithm having a polynomial complexity, which may be used to solve large sized problems.

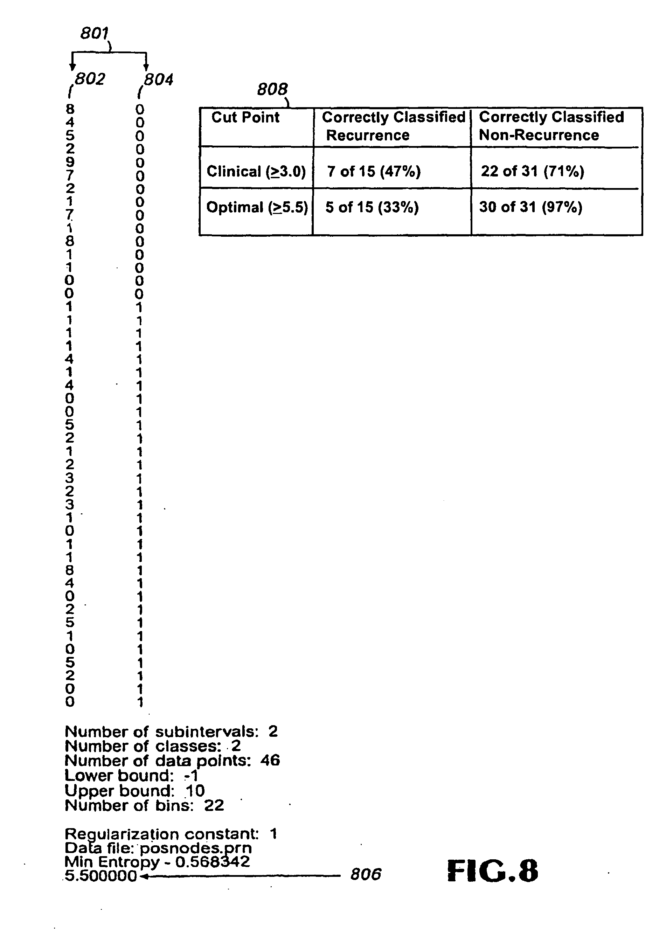

As mentioned above, the exemplary optimal categorization method **300** may be used in pre-processing data and/or post-processing the output of a learning machine. For example, as a pre-processing transformation step, the exemplary optimal categorization method **300** may be used to extract classification information from raw data. As a post-processing technique, the exemplary optimal range categorization method may be used to determine the optimal cut-off values for markers objectively based on data, rather than relying on ad hoc approaches. As should be apparent, the exemplary optimal categorization method **300** has applications in pattern recognition, classification, regression problems, etc. The exemplary optimal categorization method **300** may also be used as a stand-alone categorization technique, independent from SVMs and other learning machines. An exemplary stand-alone application of the optimal categorization method **300** will be described with reference to FIG. 8.

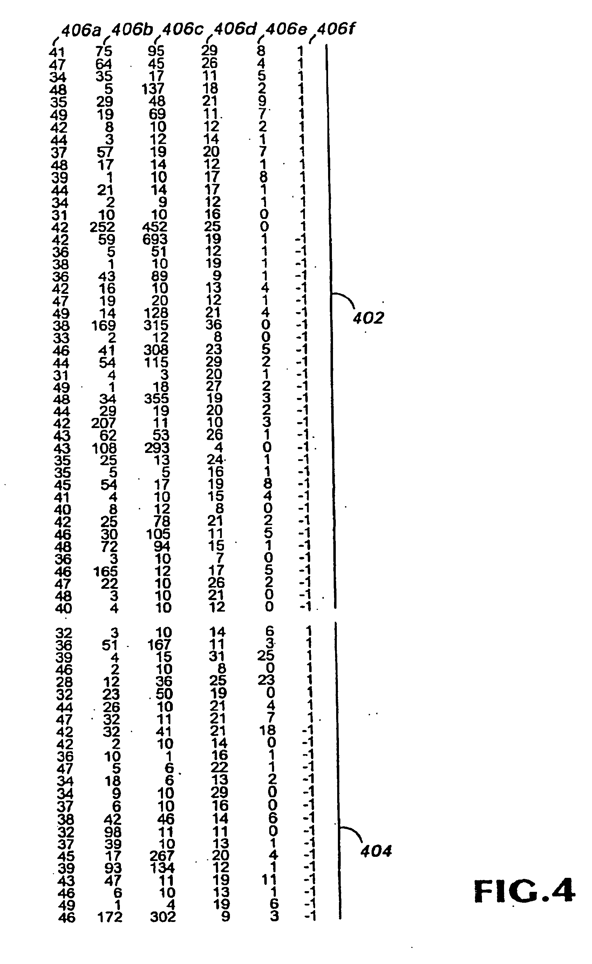

FIG. 4 illustrates an exemplary unexpanded data set **400** that may be used as input for a support vector machine. This data set **400** is referred to as "unexpanded" because no additional information has been added thereto. As shown, the unexpanded data set comprises a training data set **402** and a test data set **404.** Both the unexpanded training data set **402** and the unexpanded test data set **404** comprise data points, such as exemplary data point **406,** relating to historical clinical data from sampled medical patients. The data set **400** may be used to train a SVM to determine whether a breast cancer patient will experience a recurrence or not.

Each data point includes five input coordinates, or dimensions, and an output classification shown as **406a-f** which represent medical data collected for each patient. In particular, the first coordinate **406a** represents "Age," the second coordinate **406b** represents "Estrogen Receptor Level," the third coordinate **406c** represents "Progesterone Receptor Level," the fourth coordinate **406d** represents "Total Lymph Nodes Extracted," the fifth coordinate **406e** represents "Positive (Cancerous) Lymph Nodes Extracted," and the output classification **406f,** represents the "Recurrence Classification." The important known characteristic of the data **400** is the output classification **406f** (Recurrence Classification), which, in this example, indicates whether the sampled medical patient responded to treatment favorably without recurrence of cancer ("-1") or responded to treatment negatively with recurrence of cancer ("1"). This known characteristic will be used for learning while processing the training data in the SVM, will be used in an evaluative fashion after the test data is input into the SVM thus creating a "blind" test, and will obviously be unknown in the live data of current medical patients.

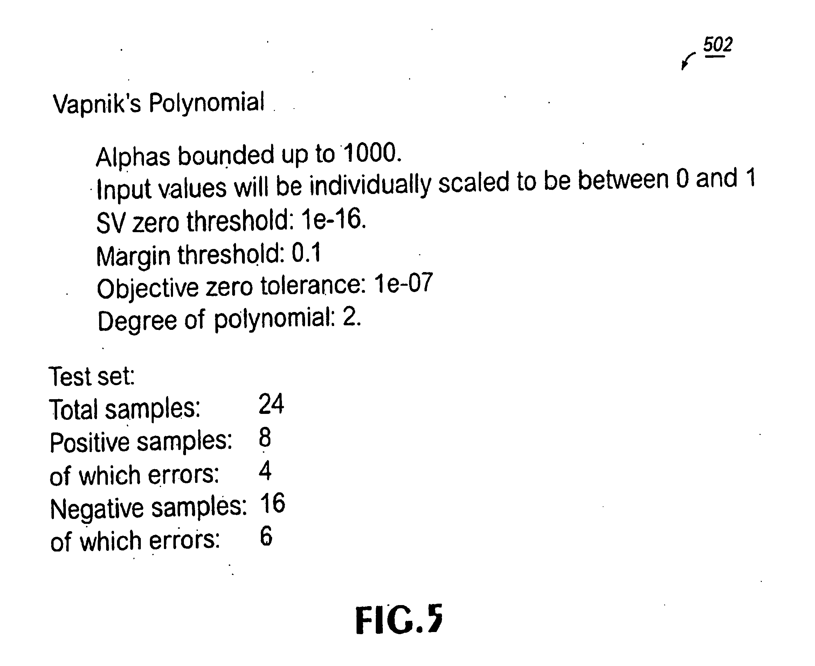

FIG. 5 illustrates an exemplary test output **502** from a SVM trained with the unexpanded training data set **402** and tested with the unexpanded data set **404** shown in FIG. 4. The test output **502** has been post-processed to be comprehensible by a human or computer. As indicated, the test output **502** shows that 24 total samples (data points) were examined by the SVM and that the SVM incorrectly identified four of eight positive samples (50%) and incorrectly identified 6 of sixteen negative samples (37.5%).

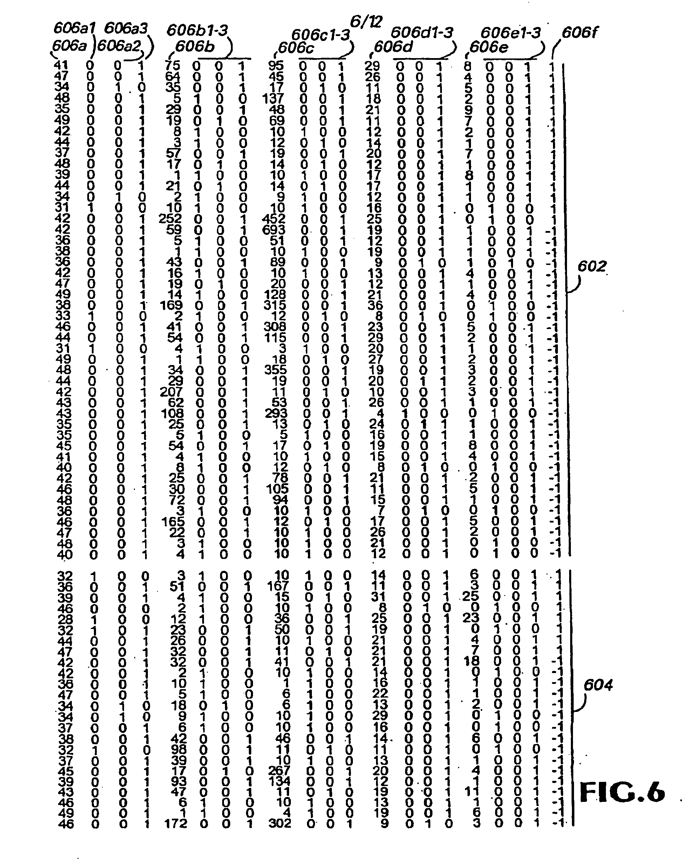

FIG. 6 illustrates an exemplary expanded data set **600** that may be used as input for a support vector machine. This data set **600** is referred to as "expanded" because additional information has been added thereto. Note that aside from the added information, the expanded data set **600** is identical to the unexpanded data set **400** shown in FIG. 4. The additional information supplied to the expanded data set has been supplied using the exemplary optimal range categorization method **300** described with reference to FIG. 3. As shown, the expanded data set comprises a training data set **602** and a test data set **604.** Both the expanded training data set **602** and the expanded test data set **604** comprise data points, such as exemplary data point **606,** relating to historical data from sampled medical patients. Again, the data set **600** may be used to train a SVM to learn whether a breast cancer patient will experience a recurrence of the disease.

Through application of the exemplary optimal categorization method **300,** each expanded data point includes twenty coordinates (or dimensions) **606a1-3** through **606e1-3,** and an output classification **606f,** which collectively represent medical data and categorization transformations thereof for each patient. In particular, the first coordinate **606a** represents "Age," the second coordinate through the fourth coordinate **606a1 606a3** are variables that combine to represent a category of age. For example, a range of ages may be categorized, for example, into "young" "middle-aged" and "old" categories respective to the range of ages present in the data. As shown, a string of variables "0" (606a1), "0" **(606a2),** "1" **(606a3)** may be used to indicate that a certain age value is categorized as "old." Similarly, a string of variables "0" (606a1), "1" **(606a2),** "0" **(606a3)** may be used to indicate that a certain age value is categorized as "middle-aged." Also, a string of variables "1" (606a1), "0" **(606a2),** "0" (606a1) may be used to indicate that a certain age value is categorized as "young." From an inspection of FIG. 6, it may be seen that the optimal categorization of the range of "Age" **606a** values, using the exemplary method **300,** was determined to be 31-33 = "young," 34 = "middle-aged" and 35-49 = "old." The other coordinates, namely coordinate **606b** "Estrogen Receptors Level," coordinate **606c** "Progesterone Receptor Level," coordinate **606d** "Total Lymph Nodes Extracted," and coordinate **606e** "Positive (Cancerous) Lymph Nodes Extracted," have each been optimally categorized in a similar manner.

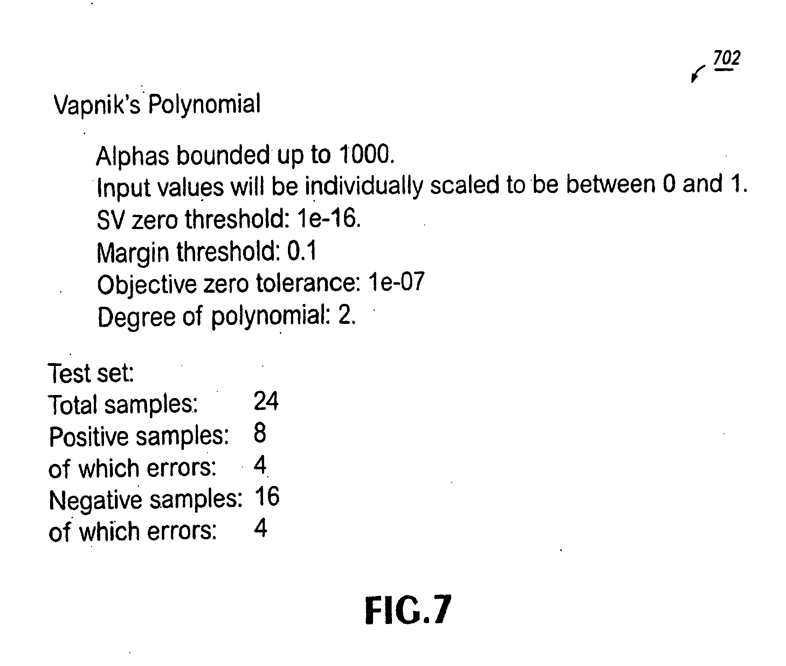

FIG. 7 illustrates an exemplary expanded test output **702** from a SVM trained with the expanded training data set **602** and tested with the expanded data set **604** shown in FIG. 6. The expanded test output **702** has been post-processed to be comprehensible by a human or computer. As indicated, the expanded test output **702** shows that 24 total samples (data points) were examined by the SVM and that the SVM incorrectly identified four of eight positive samples (50%) and incorrectly identified four of sixteen negative samples (25%). Accordingly, by comparing this expanded test output **702** with the unexpanded test output **502** of FIG. 5, it may be seen that the expansion of the data points leads to improved results (i.e. a lower global minimum error), specifically a reduced instance of patients who would unnecessarily be subjected to follow-up cancer treatments.

FIG. 8 illustrates an exemplary input and output for a stand alone application of the optimal categorization method **300** described in FIG. 3. In the example of FIG. 8, the input data set **801** comprises a "Number of Positive Lymph Nodes" **802** and a corresponding "Recurrence Classification" **804.** In this example, the optimal categorization method **300** has been applied to the input data set **801** in order to locate the optimal cutoff point for determination of treatment for cancer recurrence, based solely upon the number of positive lymph nodes collected in a post-surgical tissue sample. The well-known clinical standard is to prescribe treatment for any patient with at least three positive nodes. However, the optimal categorization method **300** demonstrates that the optimal cutoff **806,** based upon the input data **801,** should be at the higher value of 5.5 lymph nodes, which corresponds to a clinical rule prescribing follow-up treatments in patients with at least six positive lymph nodes.

As shown in the comparison table **808,** the prior art accepted clinical cutoff point (≥ 3.0) resulted in 47% correctly classified recurrences and 71 % correctly classified non-recurrences. Accordingly, 53% of the recurrences were incorrectly classified (further treatment was improperly not recommended) and 29% of the non-recurrences were incorrectly classified (further treatment was incorrectly recommended). By contrast, the cutoff point determined by the optimal categorization method **300** (≥ 5.5) resulted in 33% correctly classified recurrences and 97% correctly classified non-recurrences. Accordingly, 67% of the recurrences were incorrectly classified (further treatment was improperly not recommended) and 3% of the non-recurrences were incorrectly classified (further treatment was incorrectly recommended).

As shown by this example, it may be feasible to attain a higher instance of correctly identifying those patients who can avoid the post-surgical cancer treatment regimes, using the exemplary optimal categorization method **300.** Even though the cutoff point determined by the optimal categorization method **300** yielded a moderately higher percentage of incorrectly classified recurrences, it yielded a significantly lower percentage of incorrectly classified non-recurrences. Thus, considering the trade-off, and realizing that the goal of the optimization problem was the avoidance of unnecessary treatment, the results of the cutoff point determined by the optimal categorization method **300** are mathematically superior to those of the prior art clinical cutoff point. This type of information is potentially extremely useful in providing additional insight to patients weighing the choice between undergoing treatments such as chemotherapy or risking a recurrence of breast cancer.

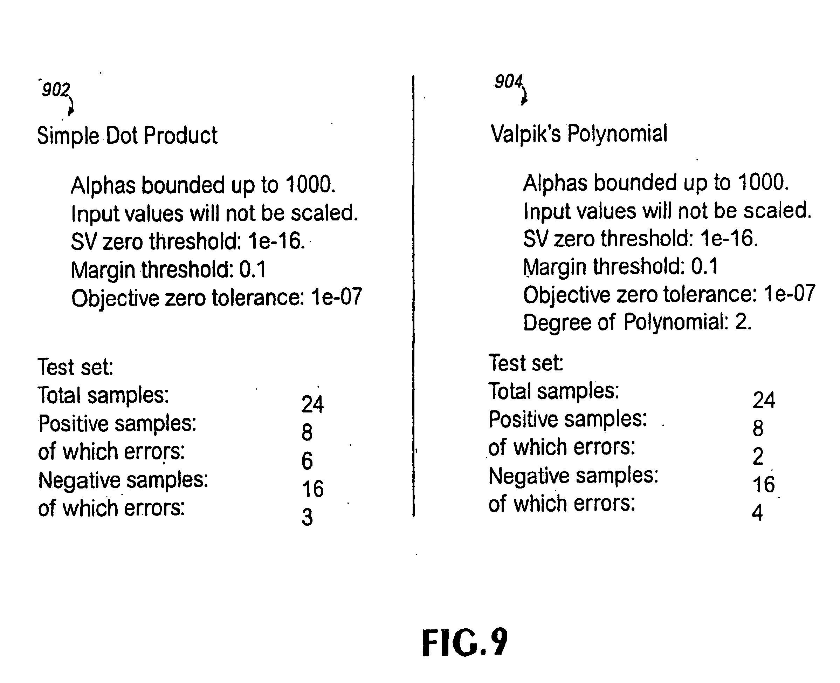

FIG. 9 is a comparison of exemplary post-processed output from a first support vector machine comprising a linear kernel and a second support vector machine comprising a polynomial kernel. FIG. 9 demonstrates that a variation in the selection of a kernel may affect the level of quality of the output of a SVM. As shown, the post-processed output of a first SVM **902** comprising a linear dot product kernel indicates that for a given test set of twenty four sample, six of eight positive samples were incorrectly identified and three of sixteen negative samples were incorrectly identified. By way of comparison, the post-processed output for a second SVM **904** comprising a polynomial kernel indicates that for the same test set only two of eight positive samples were incorrectly identified and four of sixteen negative samples were identified. By way of comparison, the polynomial kernel yielded significantly improved results pertaining to the identification of positive samples and yielded only slightly worse results pertaining to the identification of negative samples. Thus, as will be apparent to those of skill in the art, the global minimum error for the polynomial kernel is lower than the global minimum error for the linear kernel for this data set.

FIG. 10 and the following discussion are intended to provide a brief and general description of a suitable computing environment for implementing the present invention. Although the system shown in FIG. 10 is a conventional personal computer **1000,** those skilled in the art will recognize that the invention also may be implemented using other types of computer system configurations. The computer **1000** includes a central processing unit **1022,** a system memory **1020,** and an Input/Output ("I/O") bus **1026.** A system bus **1021** couples the central processing unit **1022** to the system memory **1020.** A bus controller **1023** controls the flow of data on the I/O bus **1026** and between the central processing unit **1022** and a variety of internal and external I/O devices. The I/O devices connected to the I/O bus **1026** may have direct access to the system memory **1020** using a Direct Memory Access ("DMA") controller **1024.**

The I/O devices are connected to the I/O bus **1026** via a set of device interfaces. The device interfaces may include both hardware components and software components. For instance, a hard disk drive **1030** and a floppy disk drive **1032** for reading or writing removable media **1050** may be connected to the I/O bus **1026** through disk drive controllers **1040.** An optical disk drive **1034** for reading or writing optical media **1052** may be connected to the I/O bus **1026** using a Small Computer System Interface ("SCSI") **1041.** Alternatively, an IDE (ATAPI) or EIDE interface may be associated with an optical drive such as a may be the case with a CD-ROM drive. The drives and their associated computer-readable media provide nonvolatile storage for the computer **1000.** In addition to the computer-readable media described above, other types of computer-readable media may also be used, such as ZIP drives, or the like.

A display device **1053,** such as a monitor, is connected to the I/O bus **1026** via another interface, such as a video adapter **1042.** A parallel interface **1043** connects synchronous peripheral devices, such as a laser printer **1056,** to the I/O bus **1026.** A serial interface **1044** connects communication devices to the I/O bus **1026.** A user may enter commands and information into the computer **1000** via the serial interface **1044** or by using an input device, such as a keyboard **1038,** a mouse **1036** or a modem **1057.** Other peripheral devices (not shown) may also be connected to the computer **1000,** such as audio input/output devices or image capture devices.

A number of program modules may be stored on the drives and in the system memory **1020.** The system memory **1020** can include both Random Access Memory ("RAM") and Read Only Memory ("ROM"). The program modules control how the computer **1000** functions and interacts with the user, with I/O devices or with other computers. Program modules include routines, operating systems **1065,** application programs, data structures, and other software or firmware components. In an illustrative embodiment, the present invention may comprise one or more pre-processing program modules **1075A,** one or more post-processing program modules **1075B,** and/or one or more optimal categorization program modules **1077** and one or more SVM program modules **1070** stored on the drives or in the system memory **1020** of the computer **1000.** Specifically, pre-processing program modules **1075A,** post-processing program modules **1075B,** together with the SVM program modules **1070** may comprise computer-executable instructions for pre-processing data and post-processing output from a learning machine and implementing the learning algorithm according to the exemplary methods described with reference to FIGS. 1 and 2. Furthermore, optimal categorization program modules **1077** may comprise computer-executable instructions for optimally categorizing a data set according to the exemplary methods described with reference to FIG. 3.

The computer **1000** may operate in a networked environment using logical connections to one or more remote computers, such as remote computer **1060.** The remote computer **1060** may be a server, a router, a peer device or other common network node, and typically includes many or all of the elements described in connection with the computer **1000.** In a networked environment, program modules and data may be stored on the remote computer **1060.** The logical connections depicted in FIG. 10 include a local area network ("LAN") **1054** and a wide area network ("WAN") **1055.** In a LAN environment, a network interface **1045,** such as an Ethernet adapter card, can be used to connect the computer **1000** to the remote computer **1060.** In a WAN environment, the computer **1000** may use a telecommunications device, such as a modem **1057,** to establish a connection. It will be appreciated that the network connections shown are illustrative and other devices of establishing a communications link between the computers may be used.

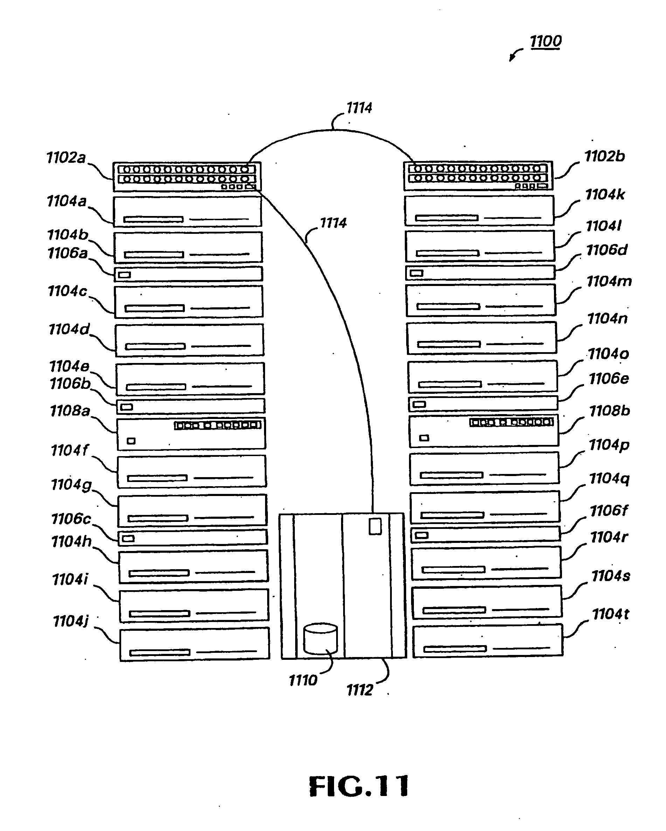

FIG. 11 is a functional block diagram illustrating an alternate exemplary operating environment for implementation of the present invention. The present invention may be implemented in a specialized configuration of multiple computer systems. An example of a specialized configuration of multiple computer systems is referred to herein as the BIOWulf™ Support Vector Processor (BSVP). The BSVP combines the latest advances in parallel computing hardware technology with the latest mathematical advances in pattern recognition, regression estimation, and density estimation. While the combination of these technologies is a unique and novel implementation, the hardware configuration is based upon Beowulf supercomputer implementations pioneered by the NASA Goddard Space Flight Center.

The BSVP provides the massively parallel computational power necessary to expedite SVM training and evaluation on large-scale data sets. The BSVP includes a dual parallel hardware architecture and custom parallelized software to enable efficient utilization of both multithreading and message passing to efficiently identify support vectors in practical applications. Optimization of both hardware and software enables the BSVP to significantly outperform typical SVM implementations. Furthermore, as commodity computing technology progresses the upgradability of the BSVP is ensured by its foundation in open source software and standardized interfacing technology. Future computing platforms and networking technology can be assimilated into the BSVP as they become cost effective with no effect on the software implementation.

As shown in FIG. 11, the BSVP comprises a Beowulf class supercomputing cluster with twenty processing nodes **1104a-t** and one host node **1112.** The processing nodes **1104a-j** are interconnected via switch **1102a,** while the processing nodes **1104k-t** are interconnected via switch **1102b.** Host node **1112** is connected to either one of the network switches **1102a** or **1102b (1102a** shown) via an appropriate Ethernet cable **1114.** Also, switch **1102a** and switch **1102b** are connected to each other via an appropriate Ethernet cable **1114** so that all twenty processing nodes **1104a-t** and the host node **1112** are effectively in communication with each other. Switches. **1102a** and **1102b** preferably comprise Fast Ethernet interconnections. The dual parallel architecture of the BSVP is accomplished through implementation of the Beowulf supercomputer's message passing multiple machine parallel configuration and utilizing a high performance dual processor SMP computer as the host node **1112.**

In this exemplary configuration, the host node **1112** contains glueless multi-processor SMP technology and consists of a dual 450Mhz Pentium II Xeon based machine with 18GB of Ultra SCSI storage, 256MB memory, two 100Mbit/sec NIC's, and a 24GB DAT network backup tape device. The host node **1112** executes NIS, MPI and/or PVM under Linux^{®} to manage the activity of the BSVP. The host node 1112 also provides the gateway between the BSVP and the outside world. As such, the internal network of the BSVP is isolated from outside interaction, which allows the entire cluster to appear to function as a single machine.

The twenty processing nodes **1104a-t** are identically configured computers containing 150MHz Pentium processors, 32MB RAM, 850MB HDD, 1.44MB FDD, and a Fast Ethernet mb100Mb/s NIC. The processing nodes **1104a-t** are interconnected with each other and the host node through NFS connections over TCP/IP. In addition to BSVP computations, the processing nodes are configured to provide demonstration capabilities through an attached bank of monitors with each node's keyboard and mouse routed to a single keyboard device and a single mouse device through the KVM switches **1108a** and **1108b.**

Software customization and development allow optimization of activities on the BSVP. Concurrency in sections of SVM processes is exploited in the most advantageous manner through the hybrid parallelization provided by the BSVP hardware. The software implements full cycle support from raw data to implemented solution. A database engine provides the storage and flexibility required for pre-processing raw data. Custom developed routines automate the pre-processing of the data prior to SVM training. Multiple transformations and data manipulations are performed within the database environment to generate candidate training data.

The peak theoretical processing capability of the BSVP is 3.90GFLOPS. Based upon the benchmarks performed by NASA Goddard Space Flight Center on their Beowulf class machines, the expected actual performance should be about 1.56GFLOPS. Thus, the performance attained using commodity component computing power in this Beowulf class cluster machine is in line with that of supercomputers such as the Cray J932/8. Further Beowulf testing at research and academic institutions indicates that a performance on the order of 18 times a single processor can generally be attained on a twenty node Beowulf cluster. For example, an optimization problem requiring 17 minutes and 45 seconds of clock time on a single Pentium processor computer was solved in 59 seconds on a Beowulf with 20 nodes. Therefore, the high performance nature of the BSVP enables practical analysis of data sets currently considered too cumbersome to handle by conventional computer systems.

The massive computing power of the BSVP renders it particularly useful for implementing multiple SVMs in parallel to solve real-life problems that involve a vast number of inputs. Examples of the usefulness of SVMs in general and the BSVP in particular comprise: genetic research, in particular the Human Genome Project; evaluation of managed care efficiency; therapeutic decisions and follow up; appropriate therapeutic triage; pharmaceutical development techniques; discovery of molecular structures; prognostic evaluations; medical informatics; billing fraud detection; inventory control; stock evaluations and predictions; commodity evaluations and predictions; and insurance probability estimates.

Those skilled in the art should appreciate that the BSVP architecture described above is illustrative in nature and is not meant to limit the scope of the present invention. For example, the choice of twenty processing nodes was based on the well known Beowulf architecture. However, the BSVP may alternately be implemented using more or less than twenty processing nodes. Furthermore the specific hardware and software components recited above are by way of example only. As mentioned, the BSVP embodiment of the present invention is configured to be compatible with alternate and/or future hardware and software components.

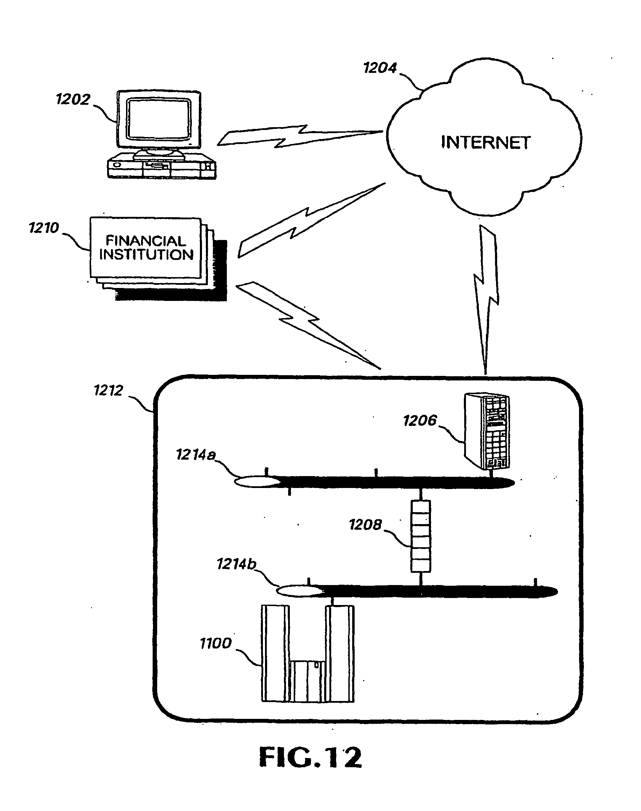

FIG. 12 is a functional block diagram illustrating an exemplary network operating environment for implementation of a further alternate embodiment of the present invention. In the exemplary network operating environment, a customer **1202** or other entity may transmit data via a distributed computer network, such as the Internet **1204,** to a vendor **1212.** Those skilled in the art should appreciate that the customer **1202** may transmit data from any type of computer or lab instrument that includes or is in communication with a communications device and a data storage device. The data transmitted from the customer **1202** may be training data, test data and/or live data to be processed by a learning machine. The data transmitted by the customer is received at the vendor's web server **1206,** which may transmit the data to one or more learning machines via an internal network **1214a-b.** As previously described, learning machines may comprise SVMs, BSVPs **1100,** neural networks, other learning machines or combinations thereof. Preferably, the web server **1206** is isolated from the learning machine(s) by way of a firewall **1208** or other security system. The vendor **1212** may also be in communication with one or more financial institutions **1210,** via the Internet **1204** or any dedicated or on-demand communications link. The web server **1206** or other communications device may handle communications with the one or more financial institutions. The financial institution(s) may comprise banks, Internet banks, clearing houses, credit or debit card companies, or the like.

In operation, the vendor may offer learning machine processing services via a web-site hosted at the web-server **1206** or another server in communication with the web-server **1206.** A customer **1202** may transmit data to the web server **1206** to be processed by a learning machine. The customer **1202** may also transmit identification information, such as a username, a password and/or a financial account identifier, to the web-server. In response to receiving the data and the identification information, the web server **1206** may electronically withdraw a pre-determined amount of funds from a financial account maintained or authorized by the customer **1202** at a financial institution **1210.** In addition, the web server may transmit the customer's data to the BSVP **1100** or other learning machine. When the BSVP **1100** has completed processing of the data and post-processing of the output, the post-processed output is returned to the web-server **1206.** As previously described, the output from a learning machine may be post-processed in order to generate a single-valued or multi-valued, computationally derived alpha-numerical classifier, for human or automated interpretation. The web server **1206** may then ensure that payment from the customer has been secured before the post-processed output is transmitted back to the customer **1202** via the Internet **1204.**

SVMs may be used to solve a wide variety of real-life problems. For example, SVMs may have applicability in analyzing accounting and inventory data, stock and commodity market data, insurance data, medical data, etc. As such, the above-described network environment has wide applicability across many industries and market segments. In the context of inventory data analysis, for example, a customer may be a retailer. The retailer may supply inventory and audit data to the web server **1206** at predetermined times. The inventory and audit data may be processed by the BSVP and/or one or more other learning machine in order to evaluate the inventory requirements of the retailer. Similarly, in the context of medical data analysis, the customer may be a medical laboratory and may transmit live data collected from a patient to the web server **1206** while the patient is present in the medical laboratory. The output generated by processing the medical data with the BSVP or other learning machine may be transmitted back to the medical laboratory and presented to the patient.

## Claims

1. A method for enhancing knowledge discovered from data using a learning machine comprising the steps of:
pre-processing a training data set (104; 204);
training the learning machine using the pre-processed training data set (106; 210);
pre-processing a test data set, wherein the test data set has known characteristics (110; 214);
testing the trained learning machine using the pre-processed test data set to generate a test output (112; 218);
post-processing the test output to determine if the test output is an optimal solution based on the known characteristics (114; 220);
if the test output is not the optimal solution, adjusting, retraining and retesting the learning machine until the optimal solution is achieved (222, 224, 208 - 220);
if the test output is the optimal solution (222):
collecting a live data set (226);
pre-processing the live data set (228);
inputting the pre-processed live data set into the trained learning machine for processing to generate a live output (230, 232); and
post-processing the live output to interpret the live output into a meaningful form (234),
**characterized in that** each pre-processing step (104, 110; 204, 214, 228) comprises increasing dimensionality of the data set by expanding each of the plurality of data points.

2. The method of claim 1, further **characterized in that** each pre-processing step further comprises identifying and cleaning up dirty data within the data set.

3. The method of claim 1 or 2, further **characterized in that** each data point or each of the training data set, the test data set and the live data set comprises a vector having at least one original coordinate; wherein increasing dimensionality of each data point comprises adding one or more new coordinates to the vector, wherein one or more new coordinates are derived by applying a transformation of one of the original coordinates.

4. The method of claim 3, further **characterized in that** the transformation is based on expert knowledge.

5. The method of claim 3, further **characterized in that** the transformation is computationally derived.

6. The method of claim 3, further **characterized in that** each of the training data set, the test data set, and the live data set comprises a continuous variable, and the transformation comprises optimally categorizing the continuous variable.

7. The method of claim 2, further **characterized in that** the step of pre-processing to clean up dirty data comprises removing, repairing or replacing dirty data points.

8. The method of any one of claims 1 through 7, wherein each of the training output, the test output and the live output comprises a continuous variable, the method further **characterized in that** post-processing (107, 114; 211, 220, 234) comprises optimally categorizing the output to derive cutoff points in the continuous variable.

9. The method of claim 8, further **characterized in that** the knowledge to be discovered from the data relates to a regression or density estimation.

10. The method of claim 8 or 9, wherein each of the training data set and the test data set comprises a range of data points sampled from the continuous variable and a class identifier, the method further **characterized in** the steps of:
determining the number of distinct class identifiers within the data set (304);
determining the number of candidate bins based on the range of the samples and a level of precision of the samples within the data set, each candidate bin representing a sub-range of the samples;
for each candidate bin, calculating entropy of the data points falling within the candidate bin (306); and
for each sequence of candidate bins that have a minimized collective entropy, defining a cutoff point in the range of samples to be at the boundary of the last candidate bin in the sequence of candidate bins (308-312).

11. The method of any one of claims 1 through 10, further **characterized in that** the post-processing (114; 220) comprises interpreting the test output into a format that can be compared with the plurality of test data points.

12. The method of any one of claims 1 through 11, further **characterized in that** the learning machine is at least one support vector machine having a kernel selected from a plurality of kernels, and the step of adjusting comprises selecting a different kernel from the plurality of kernels.

13. The method of any one of claims 1 through 12, further **characterized in that** the learning machine is a plurality of support vector machines, each support vector machine based on a different kernel from the plurality of kernels so that each support vector machine generated a different test output, and further **characterized in** the steps of:
selecting the kernel corresponding to the support vector machine that generates the test output that is the optimal solution; and
processing the pre-processed live data set using the selected kernel.

14. The method of claim 12 or 13, further **characterized in that** selecting a kernel is based on prior performance or historical data and is dependant on the nature of the knowledge to be discovered from the data or the nature of the data.

15. The method of claim 13 or 14, further **characterized by** the step of configuring two or more of the plurality of support vector machines for parallel processing based on the selected kernel and parallel processing the pre-processed live data set using the two or more support vector machines.

16. The method of any one of claims 13 through 15, wherein the plurality of support vector machines is controlled by a host processor (1112) and each of the training data set and the test data set are stored in a database (1110) in a storage device connected to the host processor (1112), the method further **characterized in that** the host processor (1112) controls collection of the training data set and the test data set from the database and input of the data sets into the support vector machines.

17. The method of any one of claims 1 through 16, further **characterized in that** post-processing the live output (234) comprises interpreting the live output into a computationally-derived alphanumerical classifier.

18. The method of any one of claims 1 through 17, further **characterized in that** the training data set, the test data set, and the live data set are input into the learning machine from a remote source (1202) via a server (1206) connected to a distributed network (1204), wherein the remote source (1202) has a financial account identifier.

19. The method of claim 18, further **characterized in that** the server (1206) is in communication over the distributed network (1204) with a financial institution (1210) in order to receive funds from a financial account identified by the financial account identifier, and in response to receiving the funds, the server (1206) transmits the interpreted live output to the remote source (1202) or another remote source.

20. A system for enhancing knowledge discovered from data using a support vector machine comprising:
a storage device (1020) for storing a database comprising a plurality of data sets, each data set having known characteristics;
an input device for inputting live data;
at least one processor (1022; 1104a-1104t; 1100) for executing a support vector machine, collecting one or more data sets from the database, pre-processing each data set, training the support vector machine using a pre-processed first data set, the support vector machine comprising a kernel selected from a plurality of different kernels, testing the trained support vector machine using a pre-processed second data set to generate a test output, post-processing the test output to determine if the test output is an optimal solution, receiving the live data set, pre-processing the live data set, processing the live data set using trained support vector learning machine to generate a live output, and post-processing the live output to interpret the live output into a meaningful form; and
an output device for outputting the interpreted live output;
**characterized in that** pre-processing comprises increasing dimensionality of the data set by expanding each of the plurality of data points.

21. The system of claim 20, wherein the at least one processor (1022; 1104a-1104t; 1100) comprises a plurality of processors (1104a-1104t) for executing a plurality of support vector machines, each support vector machine of the plurality comprising a different kernel, and further **characterized in that** the plurality of processors is controlled by a host processor (1112).

22. The system of claim 21, further **characterized in that** the host processor (1112) compares the test output of the plurality of support vector machines and selects the trained support vector machine with the kernel that produces the optimal solution for processing the live data set.

23. The system of claim 22, further **characterized in that** the host processor (1112) configures two or more processors (1104a-1104t) to execute support vector machines based upon the kernel that produced the optimal solution and parallel processes the live data set using two of more processors.

24. The system of any one of claims 20 through 23, further **characterized in that** the optimal solution is the lowest global minimum error.

25. The system of any one of claims 20 through 24, wherein pre-processing further comprises identifying and cleaning up dirty data within the data set.

26. The system of any one of claims 20 through 25, further **characterized in that** each training data point comprises a vector having one or more original coordinates, wherein increasing dimensionality comprises adding one or more new coordinates to each data point, wherein the one or more new coordinates are derived by applying a transformation to one or more of the original coordinates.

27. The system of claim 26, further **characterized in that** the transformation is based on expert knowledge.

28. The system of claim 26, wherein each data set comprises a continuous variable and further **characterized in that** the transformation comprises optimally categorizing the continuous variable of the data set.

29. The system of any one of claims 20 through 28, wherein the knowledge to be discovered from the data relates to a regression or density estimation, wherein the output of the support vector machine comprises a continuous variable, and further **characterized in that** post-processing by the at least one processor comprises optimally categorizing the output to derive cutoff points in the continuous variable.

30. The system of any one of claims 20 through 29, further **characterized in that** the post-processing of the live output comprises interpreting the live output into a computationally-derived alphanumerical classifier.

31. The system of any one of claims 20 through 30, further **characterized in that** the storage device(1020) is in communication with a server (1206) connected to a distributed network (1204) for communicating the plurality of data sets, the live data and a financial account identifier from a remote source (1202).

32. The system of claim 31, further **characterized in that** the server (1206) is in communication over the distributed network (1204) with a financial institution (1210) in order to receive funds from a financial account identified by the financial account identifier, and in response to receiving the funds, the server (1206) transmits the interpreted live output to the remote source (1202) or another remote source.

## Patentansprüche

1. Ein Verfahren zum Verbessern von in Daten entdecktem Wissen mittels einer Lernmaschine, die folgenden Schritte aufweisend:
Vorverarbeiten eines Trainingsdatensatzes (104, 204),
Trainieren der Lernmaschine mittels des vorverarbeiteten Trainingsdatensatzes (106, 210),
Vorverarbeiten eines Testdatensatzes, wobei der Testdatensatz bekannte Eigenschaften aufweist (110, 214),
Testen der trainierten Lernmaschine mittels des vorverarbeiteten Testdatensatzes zum Erzeugen einer Testausgabe (112, 218),
Nachverarbeiten der Testausgabe zum Ermitteln, ob die Testausgabe eine optimale Lösung ist, auf der Grundlage der bekannten Eigenschaften (114, 220),
wenn die Testausgabe nicht die optimale Lösung ist, Anpassen, erneutes Trainieren und erneutes Testen der Lernmaschine, bis die optimale Lösung erreicht ist (222, 224, 208 bis 220),
wenn die Testausgabe die optimale Lösung ist (222):
Sammeln eines Livedatensatzes (226),
Vorverarbeiten des Livedatensatzes (228),
Eingeben des vorverarbeiteten Livedatensatzes in die trainierte Lernmaschine zum Verarbeiten, so dass eine Liveausgabe erzeugt wird (230, 232), und
Nachverarbeiten der Liveausgabe zum Interpretieren der Liveausgabe zu einer aussagekräftigen Form (234),
**dadurch gekennzeichnet, dass** jeder Vorverarbeitungsschritt (104, 110, 204, 214, 228) das Erhöhen der Dimensionalität des Datensatzes durch Erweitern jedes aus der Mehrzahl von Datenpunkten aufweist.

2. Das Verfahren gemäß Anspruch 1, ferner **dadurch gekennzeichnet, dass** jeder Vorverarbeitungsschritt ferner das Identifizieren und Bereinigen von unsauberen Daten innerhalb des Datensatzes aufweist.

3. Das Verfahren gemäß Anspruch 1 oder 2, ferner **dadurch gekennzeichnet, dass** jeder Datenpunkt oder jeder von dem Trainingsdatensatz, dem Testdatensatz und dem Livedatensatz einen mindestens eine Ursprungskoordinate aufweisenden Vektor aufweist, wobei das Erhöhen der Dimensionalität jedes Datenpunktes das Hinzufügen von einer oder mehr neuen Koordinaten zu dem Vektor aufweist, wobei eine oder mehr neue Koordinaten durch Anwenden einer Transformation einer der Ursprungskoordinaten abgeleitet werden.

4. Das Verfahren gemäß Anspruch 3, ferner **dadurch gekennzeichnet, dass** die Transformation auf Expertenwissen basiert.

5. Das Verfahren gemäß Anspruch 3, ferner **dadurch gekennzeichnet, dass** die Transformation rechnerisch abgeleitet wird.

6. Das Verfahren gemäß Anspruch 3, ferner **dadurch gekennzeichnet, dass** jeder von dem Trainingsdatensatz, dem Testdatensatz und dem Livedatensatz eine kontinuierliche Variable aufweist und dass die Transformation das optimale Kategorisieren der kontinuierlichen Variable aufweist.

7. Das Verfahren gemäß Anspruch 2, ferner **dadurch gekennzeichnet, dass** der Schritt des Vorverarbeitens zum Bereinigen von unsauberen Daten das Entfernen, Reparieren oder Ersetzen von unsaubere-Daten-Punkten aufweist.

8. Das Verfahren gemäß einem der Ansprüche 1 bis 7, wobei jede von der Trainingsausgabe, der Testausgabe und der Liveausgabe eine kontinuierliche Variable aufweist, wobei das Verfahren ferner **dadurch gekennzeichnet ist, dass** das Nachverarbeiten (107, 114, 211, 220, 234) das optimale Kategorisieren der Ausgabe zum Ableiten von Grenzpunkten in der kontinuierlichen Variablen aufweist.

9. Das Verfahren gemäß Anspruch 8, ferner **dadurch gekennzeichnet, dass** das in den Daten zu entdeckende Wissen eine Regressions- oder Dichteschätzung betrifft.

10. Das Verfahren gemäß Anspruch 8 oder 9, wobei jeder von dem Trainingsdatensatz und dem Testdatensatz einen Bereich von als Stichproben aus der kontinuierlichen Variable entnommenen Datenpunkten und einen Klassenidentifikator aufweist, wobei das Verfahren ferner durch die folgenden Schritte **gekennzeichnet** ist:
Bestimmen der Anzahl von unterschiedlichen Klassenidentifikatoren innerhalb des Datensatzes (304),
Bestimmen der Anzahl von Kandidatenklassen auf der Grundlage des Probenbereichs und eines Genauigkeitsgrades der Proben innerhalb des Datensatzes, wobei jede Kandidatenklasse einen Teilbereich der Proben repräsentiert,
Berechnen der Entropie der in die Kandidatenklasse fallenden Datenpunkte für jede Kandidatenklasse (306), und
für jede Folge von Kandidatenklassen, die eine minimale kollektive Entropie aufweisen, Definieren eines Grenzpunktes in dem Probenbereich, der die Grenze der letzten Kandidatenklasse in der Folge von Kandidatenklassen ist (308-312).

11. Das Verfahren gemäß einem der Ansprüche 1 bis 10, ferner **dadurch gekennzeichnet, dass** das Nachverarbeiten (114, 220) das Interpretieren der Testausgabe in ein Format aufweist, das mit der Mehrzahl von Testdatenpunkten verglichen werden kann.

12. Das Verfahren gemäß einem der Ansprüche 1 bis 11, ferner **dadurch gekennzeichnet, dass** die Lernmaschine mindestens eine Support-Vektor-Maschine mit einem aus einer Mehrzahl von Kernen ausgewählten Kern ist, und der Schritt des Anpassens das Auswählen eines anderen Kerns aus der Mehrzahl von Kernen aufweist.

13. Das Verfahren gemäß einem der Ansprüche 1 bis 12, ferner **dadurch gekennzeichnet, dass** die Lernmaschine eine Mehrzahl von Support-Vektor-Maschinen ist, wobei jede Support-Vektor-Maschine auf einem unterschiedlichen Kern aus der Mehrzahl von Kernen basiert, so dass jede Support-Vektor-Maschine eine unterschiedliche Testausgabe erzeugt, und ferner durch die folgenden Schritte **gekennzeichnet**:
Auswählen des Kerns, der der Support-Vektor-Maschine entspricht, die die Testausgabe erzeugt, die die optimale Lösung ist, und
Verarbeiten des vorverarbeiteten Livedatensatzes mittels des ausgewählten Kerns.

14. Das Verfahren gemäß Anspruch 12 oder 13, ferner **dadurch gekennzeichnet, dass** das Auswählen eines Kerns auf früherer Leistung oder historischen Daten basiert und von der Art des in den Daten zu entdeckenden Wissens oder von der Art der Daten abhängt.

15. Das Verfahren gemäß Anspruch 13 oder 14, ferner **gekennzeichnet durch** den Schritt des Konfigurierens von zwei oder mehr der Mehrzahl von Support-Vektor-Maschinen für eine parallele Verarbeitung auf der Grundlage des ausgewählten Kerns und eine parallele Verarbeitung des vorverarbeiteten Livedatensatzes mittels der zwei oder mehr Support-Vektor-Maschinen.

16. Das Verfahren gemäß einem der Ansprüche 13 bis 15, wobei die Mehrzahl von Support-Vektor-Maschinen von einem Host-Prozessor (1112) gesteuert wird und jeder von dem Trainingsdatensatz und dem Testdatensatz in einer Datenbank (1110) in einer mit dem Host-Prozessor (1112) verbundenen Speichereinrichtung gespeichert wird, wobei das Verfahren ferner **dadurch gekennzeichnet ist, dass** der Host-Prozessor (1112) das Sammeln des Trainingsdatensatzes und des Testdatensatzes aus der Datenbank und das Eingeben der Datensätze in die Support-Vektor-Maschinen steuert.

17. Das Verfahren gemäß einem der Ansprüche 1 bis 16, ferner **dadurch gekennzeichnet, dass** das Nachverarbeiten der Liveausgabe (234) das Interpretieren der Liveausgabe in einen rechnerisch abgeleiteten alphanumerischen Klassifikator aufweist.

18. Das Verfahren gemäß einem der Ansprüche 1 bis 17, ferner **dadurch gekennzeichnet, dass** der Trainingsdatensatz, der Testdatensatz und der Livedatensatz von einer entfernten Quelle (1202) über einen mit einem verteilten Netzwerk (1204) verbundenen Server (1206) in die Lernmaschine eingegeben werden, wobei die entfernte Quelle (1202) einen Finanzkonto-Identifikator aufweist.

19. Das Verfahren gemäß Anspruch 18, ferner **dadurch gekennzeichnet, dass** der Server (1206) zum Erhalten von Mitteln von einem von dem Finanzkonto-Identifikator identifizierten Finanzkonto über das verteilte Netzwerk (1204) mit einem Geldinstitut (1210) in Verbindung ist, und wobei der Server (1206) in Antwort auf das Empfangen der Mittel die interpretierte Liveausgabe an die entfernte Quelle (1202) oder eine andere entfernte Quelle übermittelt.

20. Ein System zum Verbessern von in Daten entdecktem Wissen mittels einer Support-Vektor-Maschine, aufweisend:
eine Speichereinrichtung (1020) zum Speichern einer Datenbank, die eine Mehrzahl von Datensätzen aufweist, wobei jeder Datensatz bekannte Eigenschaften aufweist,
eine Eingabevorrichtung zum Eingeben von Livedaten,
mindestens einen Prozessor (1022, 1104a-1104t, 1100) zum Ausführen einer Support-Vektor-Maschine, Sammeln eines oder mehrerer Datensätze aus der Datenbank, Vorverarbeiten jedes Datensatzes, Trainieren der Support-Vektor-Maschine mittels eines vorverarbeiteten ersten Datensatzes, wobei die Support-Vektor-Maschine einen aus einer Mehrzahl unterschiedlicher Kerne ausgewählten Kern aufweist, Testen der trainierten Support-Vektor-Maschine mittels eines vorverarbeiteten zweiten Datensatzes zum Erzeugen einer Testausgabe, Nachverarbeiten der Testausgabe zum Ermitteln, ob die Testausgabe eine optimale Lösung ist, Empfangen des Livedatensatzes, Vorverarbeiten des Livedatensatzes, Verarbeiten des Livedatensatzes mittels der trainierten Support-Vektor-Lernmaschine zum Erzeugen einer Liveausgabe, und Nachverarbeiten der Liveausgabe zum Interpretieren der Liveausgabe zu einer bedeutungsvollen Form, und
eine Ausgabevorrichtung zum Ausgeben der interpretierten Liveausgabe,
**dadurch gekennzeichnet, dass** das Vorverarbeiten das Erhöhen der Dimensionalität des Datensatzes durch Erweitern jedes aus der Mehrzahl von Datenpunkten aufweist.

21. Das System gemäß Anspruch 20, wobei der mindestens eine Prozessor (1022, 1104a-1104t, 1100) eine Mehrzahl von Prozessoren (1104a-1104t) zum Ausführen einer Mehrzahl von Support-Vektor-Maschinen aufweist, wobei jede Support-Vektor-Maschine der Mehrzahl einen unterschiedlichen Kern aufweist, und ferner **dadurch gekennzeichnet, dass** die Mehrzahl von Prozessoren von einem Host-Prozessor (1112) gesteuert wird.

22. Das System gemäß Anspruch 21, ferner **dadurch gekennzeichnet, dass** der Host-Prozessor (1112) die Testausgabe der Mehrzahl von Support-Vektor-Maschinen vergleicht und die trainierte Support-Vektor-Maschine mit dem die optimale Lösung erzeugenden Kern zum Verarbeiten des Livedatensatzes auswählt.

23. Das System gemäß Anspruch 22, ferner **dadurch gekennzeichnet, dass** der Host-Prozessor (1112) zwei oder mehr Prozessoren (1104a-1104t) zum Ausführen von Support-Vektor-Maschinen auf der Grundlage des Kerns, der die optimale Lösung erzeugt hat, konfiguriert, und den Livedatensatz mittels zwei oder mehr Prozessoren parallel verarbeitet.

24. Das System gemäß einem der Ansprüche 20 bis 23, ferner **dadurch gekennzeichnet, dass** die optimale Lösung der geringste globale Minimalfehler ist.

25. Das System gemäß einem der Ansprüche 20 bis 24, wobei das Vorverarbeiten ferner das Identifizieren und Bereinigen von unsauberen Daten innerhalb des Datensatzes aufweist.

26. Das System gemäß einem der Ansprüche 20 bis 25, ferner **dadurch gekennzeichnet, dass** jeder Trainingsdatenpunkt einen Vektor mit einer oder mehr Ursprungskoordinaten aufweist, wobei das Erhöhen der Dimensionalität das Hinzufügen von einer oder mehr neuen Koordinaten zu jedem Datenpunkt aufweist, wobei die eine oder die mehr neuen Koordinaten durch Anwenden einer Transformation auf eine oder mehr der Ursprungskoordinaten abgeleitet werden.

27. Das System gemäß Anspruch 26, ferner **dadurch gekennzeichnet, dass** die Transformation auf Expertenwissen basiert.

28. Das System gemäß Anspruch 26, wobei jeder Datensatz eine kontinuierliche Variable aufweist, ferner **dadurch gekennzeichnet, dass** die Transformation das optimale Kategorisieren der kontinuierlichen Variable des Datensatzes aufweist.

29. Das System gemäß einem der Ansprüche 20 bis 28, wobei das in den Daten zu entdeckende Wissen eine Regressions- oder Dichteschätzung betrifft, wobei die Ausgabe der Support-Vektor-Maschine eine kontinuierliche Variable aufweist, ferner **dadurch gekennzeichnet, dass** das Nachverarbeiten durch den mindestens einen Prozessor das optimale Kategorisieren der Ausgabe zum Ableiten von Grenzpunkten in der kontinuierlichen Variable aufweist.

30. Das System gemäß einem der Ansprüche 20 bis 29, ferner **dadurch gekennzeichnet, dass** das Nachverarbeiten der Liveausgabe das Interpretieren der Liveausgabe zu einem rechnerisch abgeleiteten alphanumerischen Klassifikator aufweist.

31. Das System gemäß einem der Ansprüche 20 bis 30, ferner **dadurch gekennzeichnet, dass** die Speichereinrichtung (1020) mit einem Server (1206) kommuniziert, der mit einem verteilten Netzwerk (1204) verbunden ist, zum Kommunizieren der Mehrzahl von Datensätzen, der Livedaten und eines Finanzkonto-Identifikators von einer entfernten Quelle (1202).

32. Das System gemäß Anspruch 31, ferner **dadurch gekennzeichnet, dass** der Server (1206) über das verteilte Netzwerk (1204) mit einem Geldinstitut (1210) kommuniziert, zum Empfangen von Mitteln von einem durch den Finanzkonto-Identifikator identifizierten Finanzkonto, und dass der Server (1206) in Antwort auf das Empfangen der Mittel die interpretierte Liveausgabe an die entfernte Quelle (1202) oder an eine andere entfernte Quelle übermittelt.

## Revendications

1. Procédé pour améliorer une connaissance découverte à partir de données en utilisant une machine d'apprentissage comprenant les étapes consistant à :
prétraiter un ensemble de données d'apprentissage (104 ; 204) ;
former la machine d'apprentissage en utilisant l'ensemble de données d'apprentissage prétraité (106; 210) ;
prétraiter un ensemble de données de test, dans lequel l'ensemble de données de test a des caractéristiques connues (110 ; 214) ;
tester la machine d'apprentissage formée en utilisant l'ensemble de données de test prétraité pour générer une sortie de test (112 ; 218) ;
post-traiter la sortie de test pour déterminer si la sortie de test est une solution optimale sur la base des caractéristiques connues (114 ; 220) ;
si la sortie de test n'est pas la solution optimale, ajuster, former de nouveau et tester de nouveau la machine d'apprentissage jusqu'à ce que la solution optimale soit obtenue (222, 224, 208 à 220) ;
si la sortie de test est la solution optimale (222) :
collecter un ensemble de données actives (226) ;
prétraiter l'ensemble de données actives (228) ;
entrer l'ensemble de données actives prétraité dans la machine d'apprentissage formée pour un traitement pour générer une sortie active (230, 232) ; et
post-traiter la sortie active pour interpréter la sortie active en une forme significative (234),
**caractérisé en ce que** chaque étape de prétraitement (104, 110 ; 204, 214, 228) comprend l'augmentation de la dimensionnalité de l'ensemble de données en étendant chacun de la pluralité de points de données.

2. Procédé selon la revendication 1, **caractérisé en outre en ce que** chaque étape de prétraitement consiste en outre à identifier et à nettoyer les données sales dans l'ensemble de données.

3. Procédé selon la revendication 1 ou 2, **caractérisé en outre en ce que** chaque point de données ou chacun de l'ensemble de données d'apprentissage, de l'ensemble de données de test et de l'ensemble de données actives comprend un vecteur ayant au moins une coordonnée d'origine ; dans lequel l'augmentation de la dimensionnalité de chaque point de données comprend l'ajout d'une ou de plusieurs nouvelles coordonnées au vecteur, dans lequel une ou plusieurs nouvelles coordonnées sont déduites en appliquant une transformation de l'une des coordonnées d'origine.

4. Procédé selon la revendication 3, **caractérisé en outre en ce que** la transformation est basée sur une connaissance d'expert.

5. Procédé selon la revendication 3, **caractérisé en outre en ce que** la transformation est déduite par calcul.

6. Procédé selon la revendication 3, **caractérisé en outre en ce que** chacun de l'ensemble de données d'apprentissage, de l'ensemble de données de test et de l'ensemble de données actives comprend une variable continue, et la transformation comprend le classement de manière optimale de la variable continue.

7. Procédé selon la revendication 2, **caractérisé en outre en ce que** l'étape de prétraitement pour nettoyer les données sales comprend le retrait, la réparation ou le remplacement des points de données sales.

8. Procédé selon l'une quelconque des revendications 1 à 7, dans lequel chacune de la sortie d'apprentissage, de la sortie de test et de la sortie active comprend une variable continue, le procédé étant **caractérisé en outre en ce que** le post-traitement (107, 114 ; 211, 220, 234) comprend le classement de manière optimale de la sortie pour déduire des points de coupure dans la variable continue.

9. Procédé selon la revendication 8, **caractérisé en outre en ce que** la connaissance à découvrir à partir des données concerne une régression ou une estimation de densité.

10. Procédé selon la revendication 8 ou 9, dans lequel chacun de l'ensemble de données d'apprentissage et de l'ensemble de données de test comprend une plage de points de données échantillonnés à partir de la variable continue et un identifiant de catégorie, le procédé étant en outre **caractérisé par** les étapes consistant à :
déterminer le nombre d'identifiants de classe distincts dans l'ensemble de données (304) ;
déterminer le nombre de récipients candidats sur la base de la plage des échantillons et d'un niveau de précision des échantillons dans l'ensemble de données, chaque récipient candidat représentant une sous-plage des échantillons ;
pour chaque récipient candidat, calculer l'entropie des points de données tombant dans le récipient candidat (306) ; et
pour chaque séquence de récipients candidats qui ont une entropie collective réduite à un minimum, définir un point de coupure dans la plage d'échantillons comme étant à la frontière du dernier récipient candidat dans la séquence de récipients candidats (308 à 312).

11. Procédé selon l'une quelconque des revendications 1 à 10, **caractérisé en outre en ce que** le post-traitement (114 ; 220) comprend l'interprétation de la sortie de test en un format qui peut être comparé à la pluralité de points de données de test.

12. Procédé selon l'une quelconque des revendications 1 à 11, **caractérisé en outre en ce que** la machine d'apprentissage est au moins une machine à vecteurs de support comportant un noyau sélectionné parmi une pluralité de noyaux, et l'étape d'ajustement comprend la sélection d'un noyau différent parmi la pluralité de noyaux.

13. Procédé selon l'une quelconque des revendications 1 à 12, **caractérisé en outre en ce que** la machine d'apprentissage consiste en une pluralité de machines à vecteurs de support, chaque machine à vecteurs de support étant basée sur un noyau différent parmi la pluralité de noyaux de sorte que chaque machine à vecteurs de support génère une sortie de test différente, et **caractérisé en outre par** les étapes consistant à :
sélectionner le noyau correspondant à la machine à vecteurs de support qui génère la sortie de test qui est la solution optimale ; et
traiter l'ensemble de données actives prétraité en utilisant le noyau sélectionné.

14. Procédé selon la revendication 12 ou 13, **caractérisé en outre en ce que** la sélection d'un noyau est basée sur une performance antérieure ou sur des données d'historique et dépend de la nature de la connaissance à découvrir à partir des données ou de la nature des données.

15. Procédé selon la revendication 13 ou 14, **caractérisé en outre par** l'étape de configuration de deux de la pluralité de machines à vecteurs de support ou plus pour un traitement en parallèle sur la base du noyau sélectionné et un traitement en parallèle de l'ensemble de données actives prétraité en utilisant les deux machines à vecteurs de support ou plus.

16. Procédé selon l'une quelconque des revendications 13 à 15, dans lequel la pluralité de machines à vecteurs de support sont commandées par un processeur hôte (1112) et chacun de l'ensemble de données d'apprentissage et de l'ensemble de données de test est mémorisé dans une base de données (1110) dans un dispositif de mémorisation connecté au processeur hôte (1112), le procédé étant **caractérisé en outre en ce que** le processeur hôte (1112) commande la collecte de l'ensemble de données d'apprentissage et de l'ensemble de données de test dans la base de données et l'entrée des ensembles de données dans les machines à vecteurs de support.

17. Procédé selon l'une quelconque des revendications 1 à 16, **caractérisé en outre en ce que** le post-traitement de la sortie active (234) comprend l'interprétation de la sortie active en un classifieur alphanumérique déduit par calcul.

18. Procédé selon l'une quelconque des revendications 1 à 17, **caractérisé en outre en ce que** l'ensemble de données d'apprentissage, l'ensemble de données de test et l'ensemble de données actives sont entrés dans la machine d'apprentissage à partir d'une source à distance (1202) par l'intermédiaire d'un serveur (1206) connecté à un réseau réparti (1204), dans lequel la source à distance (1202) a un identifiant de compte financier.

19. Procédé selon la revendication 18, **caractérisé en outre en ce que** le serveur (1206) est en communication sur le réseau réparti (1204) avec un organisme fmancier (1210) afin de recevoir des fonds d'un compte financier identifié par l'identifiant de compte financier, et en réponse à la réception des fonds, le serveur (1206) transmet la sortie active interprétée à la source à distance (1202) ou à une autre source à distance.

20. Système pour améliorer une connaissance découverte à partir de données en utilisant une machine à vecteurs de support comprenant :
un dispositif de mémorisation (1020) pour mémoriser une base de données comprenant une pluralité d'ensembles de données, chaque ensemble de données ayant des caractéristiques connues ;
un dispositif d'entrée pour entrer des données actives ;
au moins un processeur (1022 ; 1104a à 1104t; 1100) pour mettre en oeuvre une machine à vecteurs de support, collecter un ou plusieurs ensembles de données dans la base de données, prétraiter chaque ensemble de données, former la machine à vecteurs de support en utilisant un premier ensemble de données prétraité, la machine à vecteurs de support comprenant un noyau sélectionné parmi une pluralité de noyaux différents, tester la machine à vecteurs de support formée en utilisant un deuxième ensemble de données prétraité pour générer une sortie de test, post-traiter la sortie de test pour déterminer si la sortie de test est une solution optimale, recevoir l'ensemble de données actives, prétraiter l'ensemble de données actives, traiter l'ensemble de données actives en utilisant la machine d'apprentissage à vecteurs de support formée pour générer une sortie active, et post-traiter la sortie active pour interpréter la sortie active en une forme significative ; et
un dispositif de sortie pour délivrer la sortie active interprétée ;
**caractérisé en ce que** le prétraitement comprend l'augmentation de la dimensionnalité de l'ensemble de données en étendant chacun de la pluralité de points de données.

21. Système selon la revendication 20, dans lequel ledit au moins un processeur (1022 1104a à 1104t ; 1100) comprend une pluralité de processeurs (1104a à 1104t) pour mettre en oeuvre une pluralité de machines à vecteurs de support, chaque machine à vecteurs de support de la pluralité comprenant un noyau différent, et **caractérisé en outre en ce que** la pluralité de processeurs est commandée par un processeur hôte (1112).

22. Système selon la revendication 21, **caractérisé en outre en ce que** le processeur hôte (1112) compare la sortie de test de la pluralité de machines à vecteurs de support et sélectionne la machine à vecteurs de support formée avec le noyau qui produit la solution optimale pour traiter l'ensemble de données actives.

23. Système selon la revendication 22, **caractérisé en outre en ce que** le processeur hôte (1112) configure deux processeurs (1104a à 1104t) ou plus pour mettre en oeuvre des machines à vecteurs de support sur la base du noyau qui a produit la solution optimale et traite en parallèle l'ensemble de données actives en utilisant deux processeurs ou plus.

24. Système selon l'une quelconque des revendications 20 à 23, **caractérisé en outre en ce que** la solution optimale est l'erreur minimum globale la plus faible.

25. Système selon l'une quelconque des revendications 20 à 24, dans lequel le prétraitement comprend en outre l'identification et le nettoyage des données sales de l'ensemble de données.

26. Système selon l'une quelconque des revendications 20 à 25, **caractérisé en outre en ce que** chaque point de données d'apprentissage comprend un vecteur ayant une ou plusieurs coordonnées d'origine, dans lequel l'augmentation de la dimensionnalité comprend l'ajout d'une ou de plusieurs nouvelles coordonnées à chaque point de données, dans lequel lesdites une ou plusieurs nouvelles coordonnées sont déduites en appliquant une transformation à une ou plusieurs des coordonnées d'origine.

27. Système selon la revendication 26, **caractérisé en outre en ce que** la transformation est basée sur une connaissance d'expert.

28. Système selon la revendication 26, dans lequel chaque ensemble de données comprend une variable continue et **caractérisé en outre en ce que** la transformation comprend le classement de manière optimale de la variable continue de l'ensemble de données.

29. Système selon l'une quelconque des revendications 20 à 28, dans lequel la connaissance à découvrir à partir des données concerne une régression ou une estimation de densité, dans lequel la sortie de la machine à vecteurs de support comprend une variable continue, et **caractérisé en outre en ce qu'**un post-traitement par ledit au moins un processeur comprend le classement de manière optimale de la sortie pour déduire des points de coupure dans la variable continue.

30. Système selon l'une quelconque des revendications 20 à 29, **caractérisé en outre en ce que** le post-traitement de la sortie active comprend l'interprétation de la sortie active en un classifieur alphanumérique déduit par calcul.

31. Système selon l'une quelconque des revendications 20 à 30, **caractérisé en outre en ce que** le dispositif de mémorisation (1020) est en communication avec un serveur (1206) connecté à un réseau réparti (1204) pour communiquer la pluralité d'ensembles de données, les données actives et un identifiant de compte financier à partir d'une source à distance (1202).

32. Système selon la revendication 31, **caractérisé en outre en ce que** le serveur (1206) est en communication sur le réseau réparti (1204) avec un organisme financier (1210) afin de recevoir des fonds d'un compte financier identifié par l'identifiant de compte financier, et en réponse à la réception des fonds, le serveur (1206) transmet la sortie active interprétée à la source à distance (1202) ou à une autre source à distance.
